# EUROPÄISCHE PATENTSCHRIFT

(11) **EP 1 105 593 B1**
(45) Veröffentlichungstag und Bekanntmachung des Hinweises auf die Patenterteilung: **01.08.2007**
(21) Anmeldenummer: 99955949.5
(22) Anmeldetag: 20.10.1999
(51) Int. Cl.: E04F 11/18, F16L 55/132, F16L 37/02, F16L 27/08, F16B 7/02

(54) **UNIVERSAL-VERBINDUNGSSYSTEM**
UNIVERSAL CONNECTING SYSTEM
SYSTEME DE RACCORD UNIVERSEL

(30) Priorität: 09.06.1999 DE 29909995 U; 07.08.1999 DE 29913839 U
(43) Veröffentlichungstag der Anmeldung: 13.06.2001
(73) Patentinhaber: Robert Plersch Edelstahltechnik GbmH, 87749 Hawangen (DE)
(72) Erfinder: Geiger, Hans-Peter, 73105 Dürnau (DE)
(74) Vertreter: Ludewig, Rita
(86) Internationale Anmeldenummer: PCT/EP1999/008395
(87) Internationale Veröffentlichungsnummer: WO 2000/077321

(56) Entgegenhaltungen:
- EP-A- 0 564 889
- DE-A- 19 525 334
- DE-A- 19 649 064
- DE-A- 19 649 890
- US-A- 2 214 177

## Beschreibung

Die Erfindung betrifft ein Universal- Verbindungssystem zur Verbindung aneinander gefügter Rohre, mit geradem Schnitt oder Gehrungsschnitt versehenen Rohrenden für geradlinige, kreuzweise, T- förmige sowie spitz- und stumpfwinklige Rohrverbindungen sowie für die Verbindung von Rohren mit Elementen wie Winkelstücken, Rohrbögen, Profilen, Hohlprofilen und Platten, als Gestaltungselemente wie Geländer, Ausstellungs- und Präsentationselemente, für Rohrsysteme zur Führung von Kabeln sowie gasförmigen und flüssigen Medien aller Art.

Es sind Systeme zur Verbindung von Rohren bekannt, bei denen die Stoßstellen der Rohre durch Rohrmuffen oder Überwurfmuttern miteinander verbunden sind. Bei der Verbindung von Rohren in winkeligen Bereichen von Räumen sind standardisierte Verbindungselemente wie T-Stücke, Winkelstücke und Rohrbögen erforderlich, die endseitig mit Innengewinde versehen sein müssen und in die mit Außengewinde versehene Rohrenden eingeschraubt werden. Diese Systeme haben den Nachteil, daß die Rohrverbindung von außen sichtbar und unschön sowie herstellungs- und montageseitig aufwendig und teuer ist. Auch geschweißte Rohrverbindungen sind bekannt, die zwar relativ ebene Übergänge an den Verbindungsstellen , gewährleisten, aber im Falle einer erforderlichen Reparatur oder einer Änderung der Rohrleitungsführung zerstört werden müssen, wobei es regelmäßig zu Deformierungen und vor allem zu nicht reparablen Zerstörungen des Oberflächenschutzes der Rohre kommt.

Aus der DE 297 09 986 U1 ist ein Rohrverbindungssystem bekannt, daß die Verbindung eines Rohrabschnitts von insbesondere Treppengeländern und dgl. mit einem kugeligen Eckteil vorsieht, das mindestens eine Gewindebohrung mit sich durch den Kugelmittelpunkt erstreckender Bohrungsachse aufweist, wobei der Anschlußzapfen kugelseitig eine Ausnehmung mit einer der Kugeloberfläche wenigstens bereichsweise angepaßten Stützfläche und eine im Bereich der Ausnehmung mündende Bohrung für eine in die Gewindebohrung eindrehbare Befestigungsschraube aufweist, deren Schraubenkopf auf einer gekrümmten Widerlagerfläche des

Anschlußzapfens abgestützt ist, deren Radius bei an die Kugel angesetztem Anschlußzapfen vom Kugelmittelpunkt ausgeht, wobei ein spezielles Widerlager konzipiert ist, daß in das Innere eines Rohrs eingeführt und durch die stirnseitige Rohröffnung an dem kugeligen Eckteil verschraubt ist. Nachteil dieses Systems ist, daß das Widerlager ein besonders ausgeformtes Rohrende benötigt, das als Gegenlager innerhalb des Rohres dient. Eine solche Rohrverbindung ist herstellungsseitig aufwendig und teuer.

Die DE 195 25 334 A1 konzipiert einen Bausatz aus verschiedenen Rundstäben zum Aufbau eines verkröpften Rundstab- Zugs. Um dabei mit möglichst wenigen, platzsparend gestalteten Rundstäben auszukommen, wird vorgeschlagen, den Rundstab wenigstens an einem Stabende mit einem halbkugelförmigen Abschluß zu versehen, der den gleichen Radius wie der Rundstab hat, um in diesen Abschluß kreiszylindrische Aussparungen einzulassen. Der Zylinderradius der Aussparung ist gleich dem Kreisprofilradius des Rundstabs ausgebildet und schneidet die Zylinderachse in der Stabachse. Dabei entsteht im Innenwinkelbereich zwischen der schneidenden Stab- und Zylinderachse ein sichelförmiges Segment. Diese Lösung ist eine elegante Verbindung für Rundprofile, die durch Gewindebolzen miteinander montierbar sind. Sie ist jedoch durch ihre konzipierte zentrische Schraubverbindung für Rohre nicht geeignet und herstellungsseitig kompliziert und teuer.

Aus der DE 298 11 026 U1 ist ein Verbindungssytem für Rohre bekannt, das durch eine in mindestens einem Rohrende angeordnete spreizbare Hülse gekennzeichnet ist, die durch beidseitig angeordnete Konusscheiben und eine Abstandscheibe durch eine zentrisch angeordnete Schaftschraube miteinander verbunden sind und bei dem durch einen radial in die Abstandscheibe eindrehbaren Montagestift die spreizbarer Hülse axial in dem Rohr verklemmt wird. Im montierten Zustand ist jeweils zwischen zwei Rohrstößen, die Abstandscheibe mit der Öffnung für den Montagestift zu sehen. Für eine T- förmige Rohrverbindung oder eine Verbindung mit Rohrbögen sind zusätztliche Abstandstücke und geteilte Formstücke mit unterschiedlichen Winkeln erforderlich. Diese Rohrverbindung geht von einer zentrischen Verbindung der Klemmteile aus, der das Rohrsystem an den Verbindungsstellen verschließt. Diese Rohrverbindungen sind nicht für Rohrsysteme geeignet, in denen gasförmige oder flüssige Medien oder Kabel geführt werden sollen. Außerdem ist jede Rohrverbindung durch die von außen sichtbare zwischen zwei Rohrenden angeordnete Abstandscheibe gekennzeichnet, was optisch störend und sicherheitstechnisch fragwürdig ist, da die Verbindungsstelle für jedermann erkennbar und zugänglich ist.

Die EP 564 889 A stellt eine Verbindungseinrichtung für ein, insbesondere rohrförmiges, Bauteil vor. Die Verbindungseinrichtung enthält ein, mit seinem Hinterende in die Ausnehmung eines röhrförmigen Bauteils einsetzbares, hülsenförmig ausgebildetes spreizbares Teil, ein Spreizteil mit einer Spreizfläche, die mit einer an diese angepaßten Fläche des spreizbaren Teils großflächig zusammenwirkt und einen zum Befestigen des Spreizteils bestimmten Bolzen, dadurch gekennzeichnet, daß der Bolzen ein durchgehender Gewindebolzen ist. Die Lösung sieht eine radiale Verspannung in einem Rohr vor, wobei der Spreizvorgang durch den Gewindebolzen gewährleistet wird. Der Gewindebolzen ist damit unabdingbarer Bestandteil des Spreizelements des Klemmsystems und gleichzeitig Verbindungselement zwischen zwei Spreizelementen. Die Lösung gestattet keine Rohrverbindung zur Führung flüssiger und gasförmige Medien, da das Rohrzentrum an jeder Verbindungsstelle verschlossen ist. Auch Rohrverbindungen mit in bestimmten Winkelbereichen beweglichen Teilen sind nicht herstellbar.

Aus der DE 196 49 890 A1 ist eine Vorrichtung zur Verbindung eines rohrförmigen Hohlkörpers, wie einem Handlauf, mit wenigstens einem Bauteil, wie etwa einem Träger eines Handlaufs oder einem zweiten Handlauf, mit einem Kupplungselement im Inneren des rohrförmigen Hohlkörpers und einem Verbindungsmittel, dessen eines Ende durch eine Öffnung in der Wandung des rohrförmigen Hohlkörpers hindurch im Kupplungselement verschraubbar ist, und dessen anderes Ende mit dem Bauteil verbunden ist, wobei das Kupplungselement durch Einschrauben des Verbindungsmittels an die Wandung des rohrförmigen Hohlkörpers anpreßbar ist, bekannt, dadurch gekennzeichnet, daß das Kupplungselement ein Kugelkörper ist, der wenigstens einen, das Mitdrehen des Kugelkörpers beim Einschrauben des Verbindungsmittels verhindernden, Vorsprung aufweist und das Anbringen des Bauteils unter einem frei wählbaren Winkel ermöglicht.

Auch bei dieser Lösung wird, das Kupplungselement mit Hilfe eines Gewindebolzens im Rohr gespreizt, um eine radiale Spannung im Rohr zu erzeugen. Der Gewindebolzen ist Spreizelement und gleichzeitig Verbindungselement mit weiteren Bauteilen. Das Kupplungselement verschließt den Rohrinnenraum. Die Rohrverbindung ist deshalb ebenfalls nicht für Rohrsysteme geeignet, die Gase, Flüssigkeiten und Kabel aufnehmen können.

Gegenstand der US 2 214 177 A ist eine Kupplung oder eine Verbindungsstelle für Rohre in verschiedenen Ausführungsformen. Die Figuren 1 bis 14 zeigen Verbindungselemente, die zwar in den Rohren radial gespreizt werden, die aber alle von einer geradlinigen, zentrischen Verbindung über einen Gewindebolzen ausgehen. Auch hier erfolgt die radiale Spreizung des Klemmsystems über den Gewindebolzen. Das Klemmsystem verschließt den Innenraum an jeder Verbindungsstelle. Deshalb ist die Lösung nicht zur Herstellung von Rohrsystemen zur Führung gasförmiger und flüssiger Medien sowie zu Führung von Kabeln geeignet. Außerdem sind alle Rohrenden an den Verbindungsstellen durch Quetschhülsen 3 in Fig. 1 bis 5, sechseckige Muttern 32 in Fig. 10, Keile 44 in Fig12 oder Flansche 65 in Fig. 14 unterbrochen, die zum Teil größer oder gar kleiner als der Außendurchmesser der Rohre und von außen sichtbar sind.

Schließlich offenbart die DE 196 49 064 A1 ein Verbindungselement für Haltestangen und ein Spannelement zur Befestigung des Verbinders am Rohr. Dieser Rohrverbinder geht von einer speziellen Bauform aus, die das radiale Verspannen im Rohr durch eine, mit einer Schraube bewirkten Verschiebung der dazugehörigen Teile in axialer Richtung im Rohr vorsieht. Mit dieser Verbindung ist auch eine Kabelführung möglich. Ungeachtet des zur angemeldeten Erfindung unterschiedlichen konstruktiven Aufbaus der Klemmteile ist jedoch wie bei den vorangegangen Lösungen keine Führung gasförmiger oder flüssiger Medien innerhalb des Rohrs möglich.

Der Erfindung liegt deshalb die Aufgabe zugrunde, ein Universal-Verbindungssystem mit unsichtbaren Verbindungselementen zur Verbindung aneinander gefügter Rohre mit geradem Schnitt oder Gehrungsschnitt sowie mit einem Gehrungsschnitt mit angeformten Radien versehenen Rohrenden für geradlinige, T- förmige, kreuzweise sowie spitz- und stumpfwinklige Rohrverbindungen sowie für die Verbindung von Rohren mit Winkelstücken, Rohrbögen, Profilen, Hohlprofilen und Platten zu schaffen, das auch für Rohrsysteme zur Führung von Kabeln sowie von gasförmigen und flüssigen Medien aller Art geeignet ist.
Die Aufgabe wird durch ein Universal- Verbindungssystem mit den kennzeichnenden Merkmalen des Anspruchs 1 gelöst.

Das Universal- Verbindungssystem weist mehrere erste zylindrische Klemmsysteme mit axialen Kanälen auf, die mit einem ersten Verbindungselement oder mit einem zweiten, radial schwenkbaren Verbindungselement zu koppeln sind und mehrere zweite zylindrische Klemmsysteme, die mit einem Verbindungselement in Form einer Innenrohrmuffe miteinander lösbar zu verbinden sind.

Die ersten Verbindungselemente und die zweiten radial schwenkbaren Verbindungselemente sind jeweils endseitig und die ersten Verbindungselemente außerdem mittig mit axial und radial beweglichen Anschlußstellen ausgestattet, über welche die ersten zylindrischen Klemmsysteme mit Gewindebolzen untereinander, mit ersten Verbindungselementen, mit zweiten radial schwenkbaren Verbindungselementen oder direkt mit Elementen lösbar zu verbinden sind.

Dieses Universal- Verbindungssystem zeichnet sich durch eine einfache Konstruktion der Einzelteile und deren Verbindungen aus. Es ermöglicht eine äußerst kostengünstige Herstellung der Einzelteile und eine einfach zu handhabende Montage. Die variable Benutzbarkeit der ersten zylindrischen Klemmsysteme allein sowie in Verbindung mit weiteren ersten zylindrischen Klemmsystemen oder mit den ersten oder zweiten Verbindungselementen mit den bedarfsweise angeordneten axial und radial beweglichen Anschlußstellen gewährleistet durch die Anordnung von Gewindebolzen eine einfach montierbare geradlinige, T- förmige und kreuzweise sowie spitz- und stumpfwinklige Verbindung von Rohren untereinander oder von Rohrstücken mit Vollprofilen, Winkelstücken, Rohrbögen, Platten und dergleichen.

Die mit Kanälen durchlässig gestalteten ersten zylindrischen Klemmsysteme und durch Hohlprofile gekennzeichneten ersten und zweiten Verbindungselemente und mit Dichtungselementen versehenen Rohrverbindungen ermöglichen die Verwendung des Universal-Verbindungssystems nicht nur für Rohrsysteme für Gestaltungselemente wie Geländer und Präsentationsgerüste sondern auch für Rohrsysteme, zur Führung von Kabeln sowie von gasförmigen und flüssigen Medien.

Ein besonderer Vorteil besteht darin, daß das Universal- Verbindungssystem über radiale Spannung der ersten zylindrischen Klemmsysteme oder der zweiten zylindrischen Klemmsysteme innerhalb von Rohren von außen nicht sichtbar arretiert und befestigt ist, wobei die Kanäle der ersten zylindrischen. Klemmsysteme sowie die zweiten zylindrischen Klemmsysteme die Durchlässigkeit flüssiger sowie gasförmiger Medien oder die Durchführung von Kabeln gestatten.

Die ersten und die zweiten zylindrischen Klemmsysteme sind von den offenen Stirnseiten der Rohre arretierbar und verschwinden völlig in den Rohren, wodurch eine, jeglichen optischen Erfordernissen entsprechende, Rohrverbindungsstelle geschaffen wird, die außerdem allen sicherheitstechnischen Anforderungen hinsichtlich des unbefugten Eingriffs in eine solche Verbindung entspricht.

Hervorzuheben sind auch die zweiten zylindrischen Klemmsysteme, deren Vorteil darin besteht, daß zwei mit je einem zweiten zylindrischen Klemmsystem ausgestattete Rohre über die Innenrohrmuffe und zu den Rohrwänden über Dichtungsringe radial flüssigkeits-, gas- und druckdicht abgedichtet und mit einer innerhalb der Innenrohrmuffe, zwischen den beiden zweiten zylindrischen Klemmsystemen, angeordneten Dichtung miteinander auf Stoß verschraubt und axial flüssigkeits-, gas- und druckdicht abzudichten sind.

Die zweiten zylindrischen Klemmsysteme, die über ein Verbindungselement in Form einer Innenrohrmuffe verschraubt und mit axial und radial wirkenden Dichtungen ausgestattet sind, gewährleisten einerseits einen ebenen, zentrumsfreien axialen Rohrdurchgang an den Rohrübergängen, der beidseitig vom Universal- Verbindungssystem, gleitend in den Innenrohrdurchmesser übergeht und andererseits eine axial und radial wirkende flüssigkeits-, gas- und druckdichte Rohrverbindung. Sie ermöglichen nicht nur eine unsichtbare optisch schöne Rohrverbindung von außen, sie gewährleisten auch, beispielsweise bei der Anwendung im Bereich der Lebensmittelindustrie, daß der Verbleib von Flüssigkeits- oder Fluidrückständen an den Rohrverbindungen und die damit verbundene Gefahr der Entstehung von Bakterien oder das Ansammeln von Medienrückständen und die damit einhergehende Verstopfung der Rohre vermieden wird. Dabei kann die, zwischen den Stirnflächen der zweiten zylindrischen Klemmsysteme, vorgesehene Dichtung eine Ringdichtung oder eine Scheibendichtung sein, die aus verschiedenen Materialien bestehen kann, so zum Beispiel aus Kupfer, das auch bei dünnwandigen Rohren für erhitzte Medien bis 900° C hitzebeständig ist, aus Gylon 3501 E für Lebensmittel, was ebenfalls hitzebeständig bis 230° C ist und aus Vulkanfiber für Säuren oder Laugen. Der bedarfsweise Materialeinsatz für die Dichtungen hat keine nachteiligen Auswirkungen auf die Dichtheit, erweitert jedoch erheblich die Anwendungsbreite des erfindungsgemäßen Universal- Verbindungssystems.

Vorteilhaft ist auch der konstruktive Aufbau des ersten zylindrischen Klemmsystems, nach Anspruch 2, der eine Vormontage vor dem Einsatz im Rohr ermöglicht, wodurch die Montage der Rohrverbindungen vereinfacht und somit kostengünstig ausführbar ist. Die Verbindung des ersten zylindrischen Klemmsystems sichert durch eine auf deren Kreisflächen verteilte axiale Dreischraubenspannung eine absolut stabile und anpassungsfähige, besonders Unebenheiten im Innenrohr ausgleichende, radiale Spannung im Rohr. Dabei bilden, die, in dem ersten zylindrischen Klemmsystem angeordneten über die Kreisflächen verteilten Durchgangsöffnungen, Kanäle, die die Durchlässigkeit gasförmiger und flüssiger Medien oder die Durchführung von Kabeln gestatten. Die ersten zylindrischen Klemmsysteme sind allein als geradliniges Verbindungselement nutzbar und in einem zweiten Beispiel der Ringscheibe mit radial angeordnetem Gewindedurchgangsloch, können die ersten zylindrischen Klemmsysteme auch allein für eine T- förmige und kreuzweise Verbindung eingesetzt werden. Das in den Teilen der ersten zylindrischen Klemmsysteme zentrisch angeordnete und mit Innengewinde versehene Durchgangsloch ermöglicht eine einfache Schraubverbindung über Gewindebolzen unterschiedlicher Länge mit weiteren ersten zylindrischen Klemmsystemen oder ersten und zweiten Verbindungselementen, gemäß Anspruch 3 bis 5, sowie deren leichte radiale Arretierung, mit axial in den ersten zylindrischen Klemmsystemen angeordneten Spannschrauben oder mit endseitig auf einem zentrischen Gewindebolzen angeordneten Muttern, durch Spannringe im Rohr.

Vorteilhaft ist auch das erste Verbindungselement, nach Anspruch 3, daß durch sein Hohlprofil und die endseitigen und mittigen sowie kreuzweisen Lager zur Anordnung von Anschlußstellen, nach Anspruch 5, sowie die mittigen Langlöcher nicht nur eine geradlinige, T- förmige und kreuzweise Rohrverbindung gestattet. Vor allem ist eine, während der Montage im Rohr, leicht und individuell entlang der Rohrachse regulierbare, in einem bedarfsweise einstellbaren Neigungswinkel spitze- und stumpfwinklige Rohrverbindung im Bereich von 180° beidseitig zur Rohrachse möglich, die ebenfalls über die offenen Stirnseiten der Rohre arretierbar sind. Außerdem können an der mittigen Anschlußstelle dieses ersten Verbindungselements auch andere Elemente wie Vollprofile, Platten oder Spannschlösser, nach Anspruch 6, mittels an den Elementen angeformten oder eingeschraubten Gewindebolzen direkt angeordnet werden.

Besonders vorteilhaft ist das zweite radial schwenkbare Verbindungselement, nach Anspruch 4, das in einer kompakten Ausführung aus zwei durch einen Gelenkbolzen miteinander verbundenen Gelenkschenkeln besteht, deren Außenabmessungen maximal dem Außendurchmesser der ersten zylindrischen Klemmsysteme entsprechen, wobei jeder Gelenkschenkel aus zwei Segmenten besteht, die Stirnseiten der Segmente einerseits als geschlossene einseitig eingekerbte Ösen und andererseits rechteckig ausgebildet und deren Flächen endseitig jeweils mit einer Lagerstelle ausgestattet sind, wobei die Segmente jeweils durch ein Abstandsegment und herkömmliche Schraubverbindung über Durchgangsöffnungen derart miteinander lösbar verbunden sind, daß sich die abgerundeten und die rechteckigen Stirnseiten und die Lagerstellen deckungsgleich gegenüberliegen und der Gelenkbolzen in den an den abgerundeten Stirnseiten angeordneten Lagerstellen der Segemente geführt ist.

Dabei sind die durch den Gelenkbolzen miteinander verbundenen Gelenkschenkel jeweils an ihren freien Schenkelenden mit Lagern für die Anordnung von Anschlußstellen versehen und können mittels Gewindebolzen mit ersten zylindrischen Klemmsystemen verbunden werden, wodurch neben geradlinigen vor allem Rohrverbindungen hergestellt werden, die um die Bolzenachse der Gelenkschenkel und beiderseitig zu einer Gelenkschenkelachse im Bereich von 180° bis < 45° schwenkbar sind.

Besonders hervorzuheben sind auch die an die ersten und zweiten Verbindungselemente anordenbaren Anschlußstellen, nach Anspruch 5, die aus einem, als Drehteil ausgeführten, Gelenkbolzen mit einer, mittigen und rechtwinklig zur Bolzenachse angeordneten, Gewindedurchgangsbohrung bestehen, der jeweils in zwei gegenüberliegend angeordneten Lagerstellen der ersten und zweiten radial schwenkbaren Verbindungselemente so einsetzbar ist, daß er axial und radial beweglich ist. Durch die Beweglichkeit der Anschlußstellen kann auch ein in den Gelenkbolzen eingeschraubter Gewindebolzen axial und radial eine Relativbewegung ausführen. Diese bewegliche Anordenbarkeit unterstützt ein anpassungsfähiges radiales Zentrieren und Spreizen der mit zweiten Verbindungselementen vormontierten ersten zylindrischen Klemmsysteme in den Rohren, auch dann, wenn die inneren Rohrmäntel gewisse Unebenheiten aufweisen.

Die Variabilität des erfindungsgemäßen Universal- Verbindungssystems ist weiterhin durch seine Kombinationsfähigkeit mit Elementen, nach Anspruch 6, beispielsweise mit, in verschiedenen Formen und Winkeln ausgeführten, Winkelstücken mit Durchgangsöffnungen, Rohrbögen, Vollprofilen mit angeformten oder eingeschraubten Gewindebolzen, Platten oder mit Spannschlössem gekennzeichnet, wobei die Spannschlösser durch ein in den ersten zylindrischen Klemmsystemen anordenbares Linksgewinde ermöglicht wird und die vielseitige Anwendbarkeit des Verbindungssystems unterstreicht.

Eine vorteilhafte Ausbildung der Rohrenden mit einer zur Rohrmitte verlaufenden Fase, nach Anspruch 7, gewährleistet bei Rohrverbindungen für Gestaltungselemente oder für Kabelführungen eine derart exakte Verbindungsstelle, daß es überhaupt nicht stört, wenn das Rohrsystem aus vielen kurzen Rohren gebildet ist. Das hat außerdem den Vorteil, daß die Rohre problemlos oberflächenbehandelt werden können, wobei gestalterischen Wünschen bis zur Vergoldung leicht entsprochen werden kann.

Eine weitere vorteilhafte Ausbildung der Rohre mit einer zur Rohrmitte verlaufenden zweistufigen Fase, nach Anspruch 8, ist besonders für Rohrsysteme geeignet, die zur Führung flüssiger oder gasförmiger Medien vorgesehen sind. In der zweiten Stufe der Fasen innerhalb der Rohre werden Dichtungselemente angeordnet, wobei die Dichtungselemente, nach Anspruch 9, unterschiedlichen Anforderungen entsprechend und in verschiedenen Formen ausführbar sind.

Der Verschluß von Rohrsystemenden, nach Anspruch 10, mittels einer Maschinenschraube mit vorgesetzter Unterlegscheibe und einem, an dem ersten zylindrischen Klemmsystem an Stelle des letzten Spannrings, eingesetzten Dichtungselement unterstützt die Flexibilität des Universal-Verbindungssystems besonders auch für Rohrsysteme, die gasförmige und flüssige Medien führen.

Besonders hervorzuheben ist der konstruktive Aufbau der zweiten zylindrischen Klemmsysteme, nach Anspruch 11, der sich dadurch auszeichnet, daß alle Teile, die Unebenheiten an der Oberfläche bilden, wie Spannringe, Kegelringe, Dichtringe und Ringmuttern durch den, innen ebenen Aufnahmezylinder vom Rohrinneren ferngehalten werden. Die angearbeitete Fase an der Bundinnenseite des Aufnahmezylinders gewährleistet darüber hinaus den fast stufenlosen Übergang der Rohrverbindung zu den inneren Rohrwänden der miteinander verbundenen Rohre. Auch die jeweils an einer Stirnfläche des Aufnahmezylinders axial eingeformten und das Außengewinde in diesen Bereichen unterbrechenden Fasensegmente, die die stirnseitige Arretierung und Verspannung der zweiten zylindrischen Klemmsysteme gewährleisten, werden schließlich von der zwischen den Stirnflächen der zweiten zylindrischen Klemmsysteme innerhalb der Innenrohrmuffe angeordneten Dichtung aus einem dem jeweiligen Medium angepaßten Material verdeckt.

Die zweiten zylindrischen Klemmsysteme können sehr leicht ohne spezielle fachliche Vorkenntnisse vormontiert und in den zu verbindenden Rohren mit einem Konterschlüssel, nach Anspruch 12, arretiert werden, indem die Ringmutter gegen den Bund des Aufnahmezylinders verschraubt wird. Dabei werden die Spannringe über die Konusfläche der Kegelringe radial gegen die Rohrinnenwände gedrückt und die zweiten zylindrischen Klemmsysteme arretiert und verspannt. Bei diesem Vorgang erfolgt gleichzeitig die radiale Abdichtung der zweiten zylindrischen Klemmsysteme innerhalb der Rohre an dem zu verbindenden Rohrstoß, die durch die Dichtringe gewährleistet ist, die auf dem Aufnahmezylinder zwischen den Kegelringen angeordnet sind. Durch festes Anziehen der Ringmutter gegen den Bund des Aufnahmezylinders werden die Dichtringe axial flach zusammengedrückt, wobei sich deren verbleibende Materialoberfläche am Außenring durch den Preßvorgang strukturell so verändert, daß sie sich sehr eng an den Innenrohrmantel pressen. Gleichzeitig ist durch das Zusammenschrauben der zweiten zylindrischen Klemmsysteme über die Innenrohrmuffe und die zwischen den Stirnflächen der Aufnahmezylinder innerhalb der Innenrohrmuffe angeordnete, den jeweiligen Medium materialseitig und formseitig angepaßte, Dichtung eine axiale flüssigkeits-, gas- und druckresistente Abdichtung des Universal-Verbindungssystems gewährleistet.

Der Konterschlüssel und seine Anwendung, nach Anspruch 12 besteht aus zwei ineinander um eine Achse verdrehbaren Ringsteckschlüsseln, die in ihrer Form und Größe an die jeweilige Ausführungsform der Aufnahmezylinder und der Ringmuttern angepaßt sind. Er sichert ein einfaches Arretieren und Spannen der zweiten zylindrischen Klemmsysteme in den Rohrenden, die auf Stoß zusammengefügt werden sollen und verhindert das Manipulieren der Rohrverbindung durch unbefugte Personen.

Schließlich gewährleistet die Herstellung aller Teile des Universal-Verbindungssystem aus Edelstahl und der Dichtungselemente aus säurebeständigem Material, gemäß Anspruch 13, daß Korrosionsschäden ausgeschlossen und Oberflächenbehandlungen jeglicher Art sowie Verbindungen mit allen Materialarten und die Führung von Gasen und Flüssigkeiten, auch solchen, die aggressiv sind, wie beispielsweise Säuren und Laugen, oder solchen die Lebensmittelverträglichkeit erfordern, in den Rohrsystemen möglich sind. Die ausschließliche Verwendung von Profil-, Dreh- und Frästeilen sowie der Einsatz standardisierter Teile vereinfacht darüber hinaus den Herstellungs- und Montageprozeß und sichert eine äußerst kostengünstige Herstellung, Montage und Wartung des Universal-Verbindungssystems.

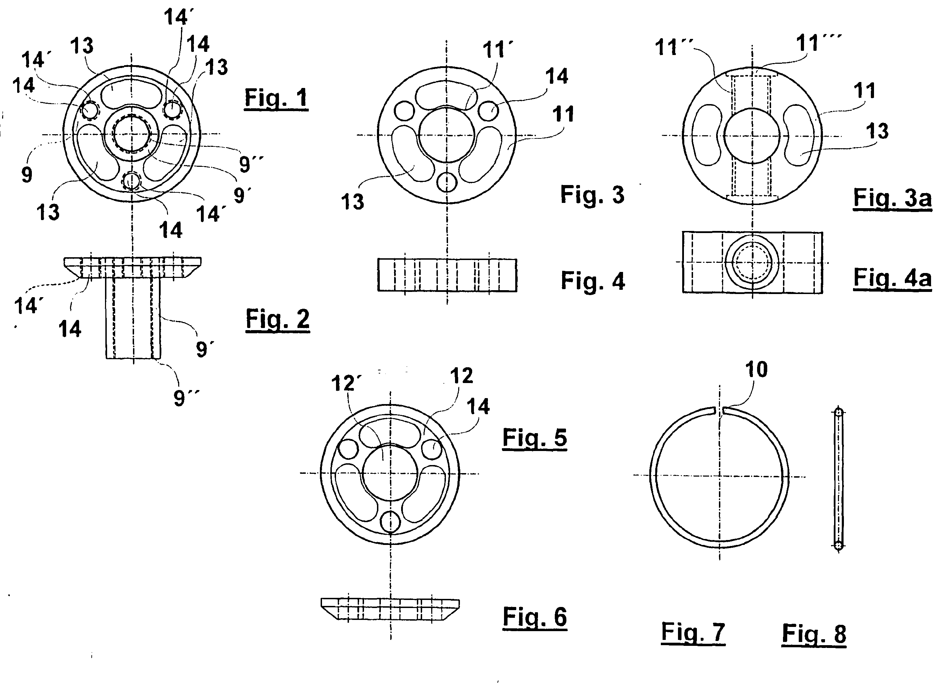

Die Erfindung wird nachstehend anhand von Beispielen beschrieben, die in den Ansprüchen nicht erfaßt sind, das Verständnis der Erfindung erleichtern und die Vielseitigkeit der Verbindungsmöglichkeiten der Erfindung erkennen lassen, wobei gleiche Teile mit gleichen Ziffern gekennzeichnet sind. Dabei zeigen die Zeichnungen in
Fig.1die Vorderansicht der Aufnahmeringscheibe des ersten Klemmsystems,
Fig.2 die Seitenansicht von Fig.1,
Fig.3 die Vorderansicht der Ringscheibe des ersten Klemmsystems,
Fig.3a die Vorderansicht der Ringscheibe des ersten zylindrischen Klemmsystems in einer zweiten Ausführung,

Fig.4 die Seitenansicht von Fig.3,
Fig.4a die Seitenansicht von Fig.3a,
Fig.5 die Vorderansicht der Endringscheibe des ersten zylindrischen Klemmsystems,
Fig.6 die Seitenansicht von Fig.5,
Fig.7 die Vorderansicht eines Spannrings des ersten Klemmsystems.
Fig.8 die Seitenansicht von Fig.7,

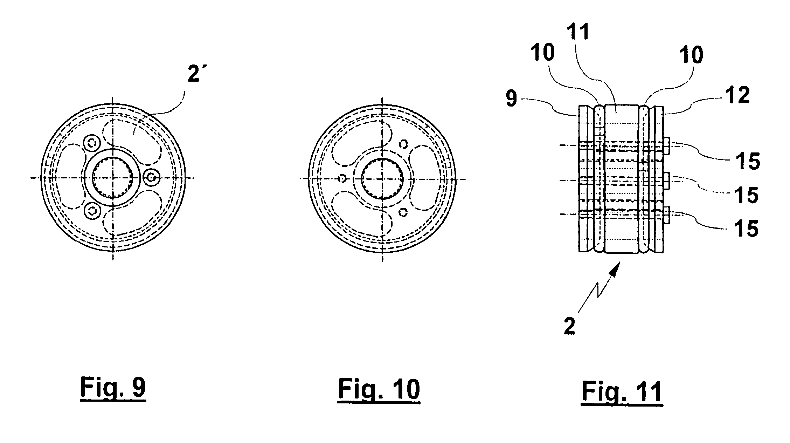

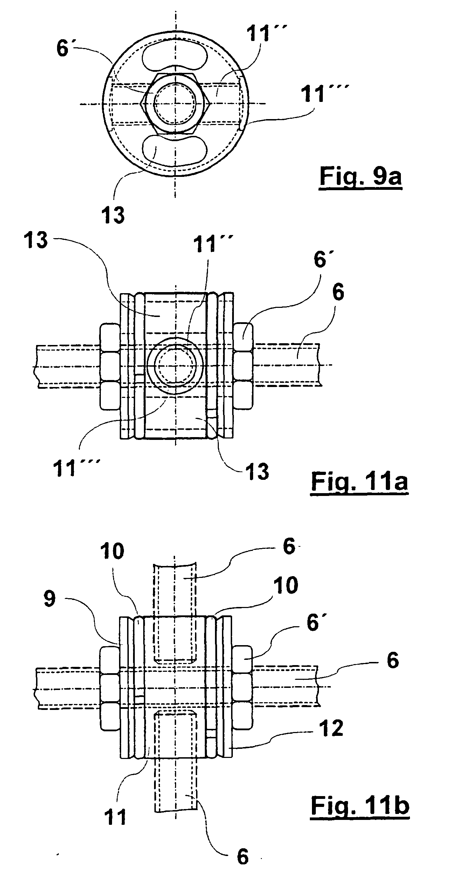

Fig.9 die Vorderansicht eines montierten ersten Klemmsystems,
Fig.9a die Vorderansicht eines vormontierten ersten zylindrischen Klemmsystems in einer zweiten Ausführung,
Fig. 10 die gegenüberliegende Ansicht von Fig.9,
Fig. 11 die Seitenansicht von Fig.9,
Fig.11a die Seitenansicht eines mit zentrischem Gewindebolzen und Muttern verschraubten ersten zylindrischen Klemmsystems,
Fig. 11b die Seitenansicht von Fig. 11a mit kreuzweise angeordneten Gewindebolzen,

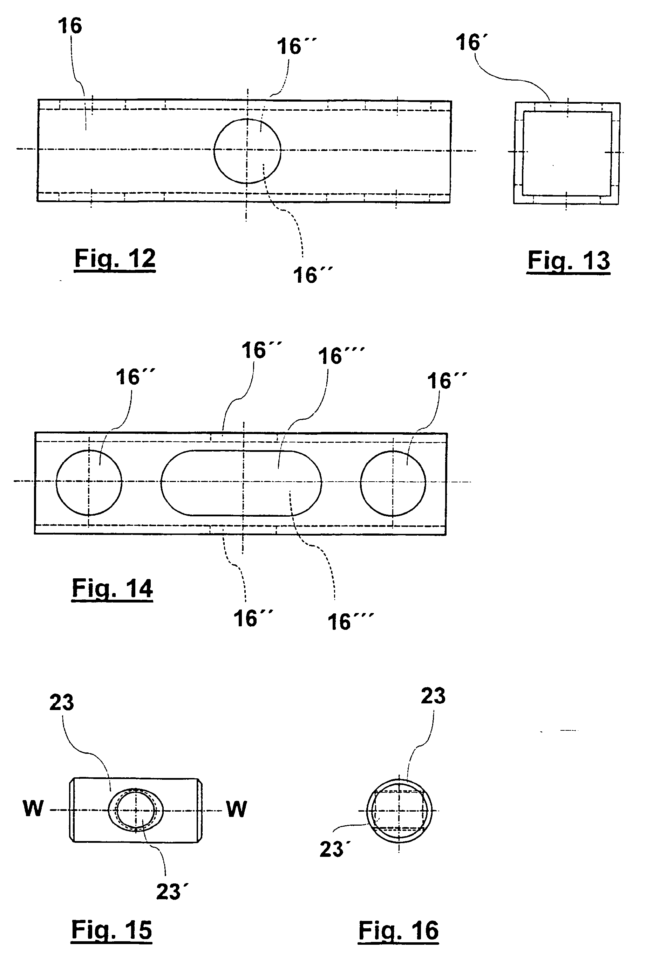

Fig.12 die Vorderansicht eines geradlinigen, T- förmigen und kreuzweisen ersten Verbindungselements,
Fig.13 die Seitenansicht von Fig.12,
Fig.14 die Draufsicht auf Fig. 12,
Fig.15 die Vorderansicht eines Gelenkbolzens mit mittigem Gewindeloch,
Fig.16 die Seitenansicht von Fig.15,

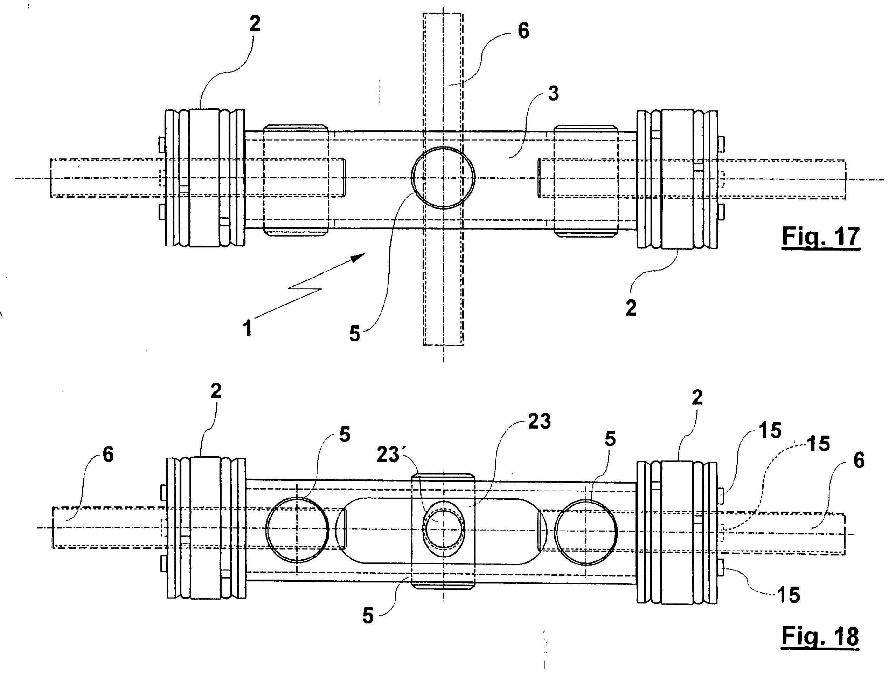

Fig.17 die Vorderansicht eines ersten Verbindungselements vormontiert mit kreuzweisem Gewindebolzen und geradlinigen endseitigen ersten zylindrischen Klemmsystemen,
Fig.18 die Draufsicht auf Fig.17,

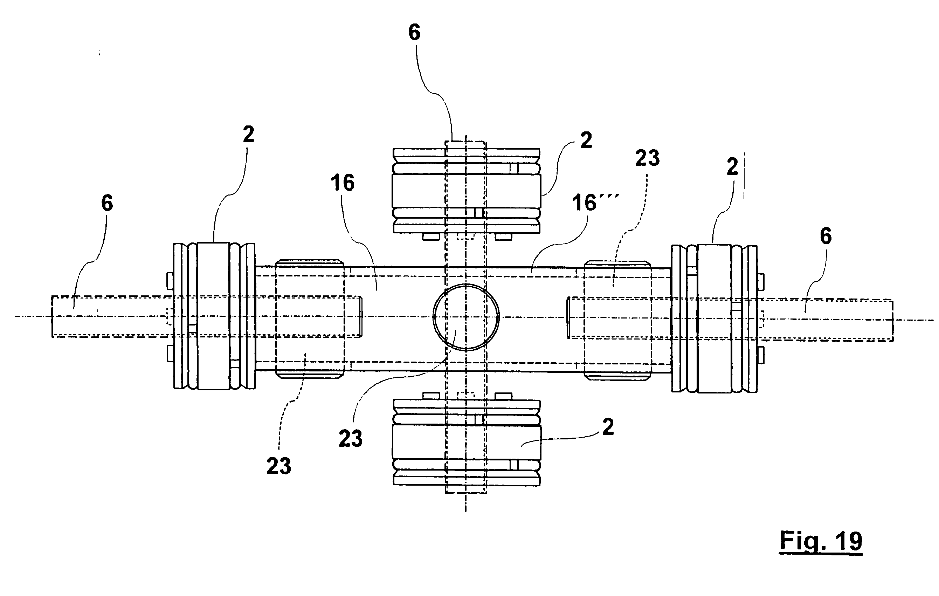

Fig.19 die Darstellung nach Fig.17 mit kreuzweise über Gewindebolzen angeordneten ersten zylindrischen Klemmsystemen,

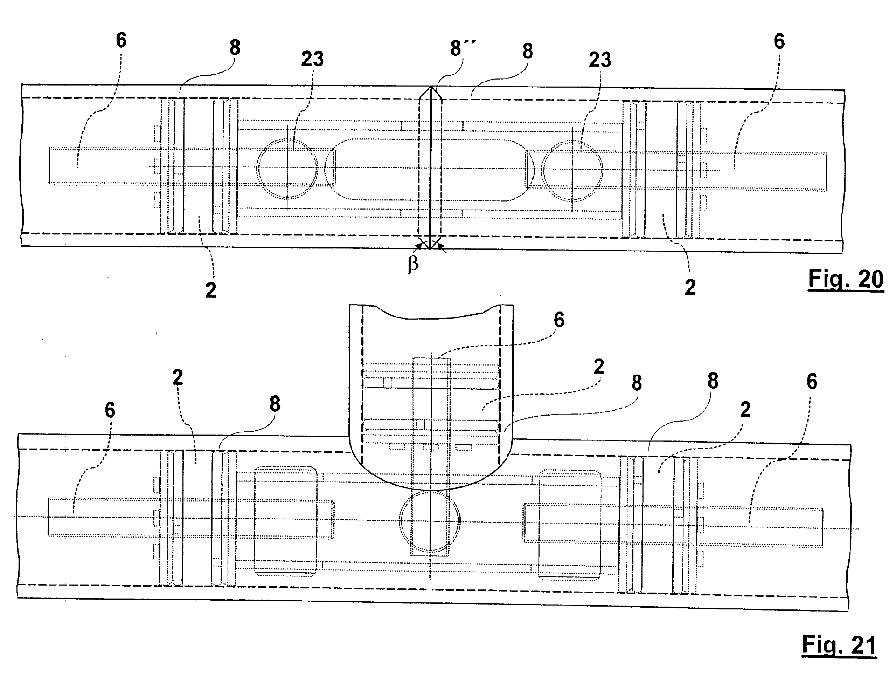

Fig.20 eine geradlinige Rohrverbindung mit einem geradlinigen ersten Verbindungselement,

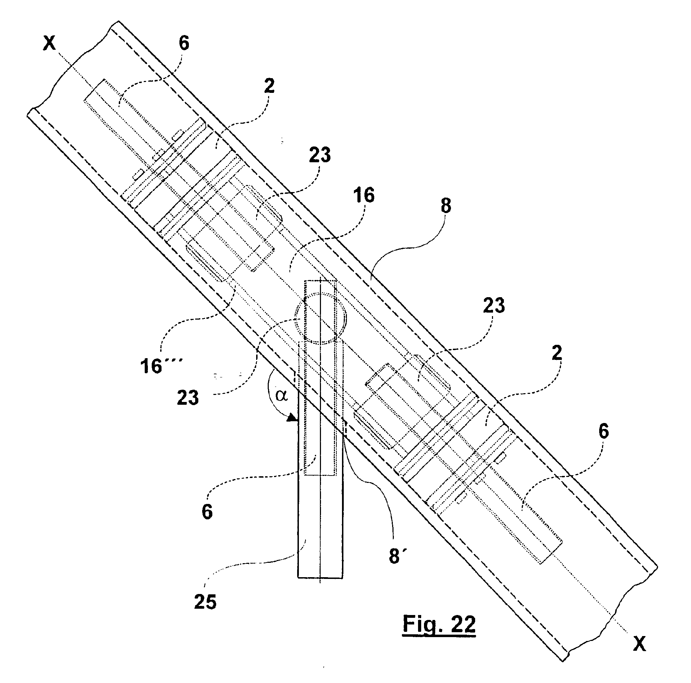

Fig.21 eine T- förmige Rohrverbindung mit einem ersten Verbindungselement,
Fig.22 eine spitzwinklig einstellbare Verbindung eines Rohrs mit einem zylindrischen Profilstück mit einem ersten Verbindungselement,

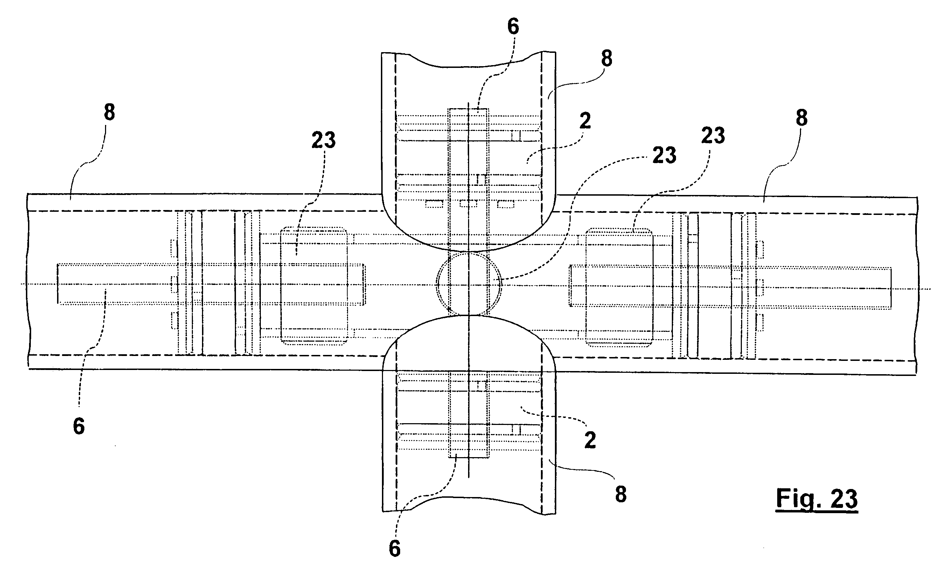

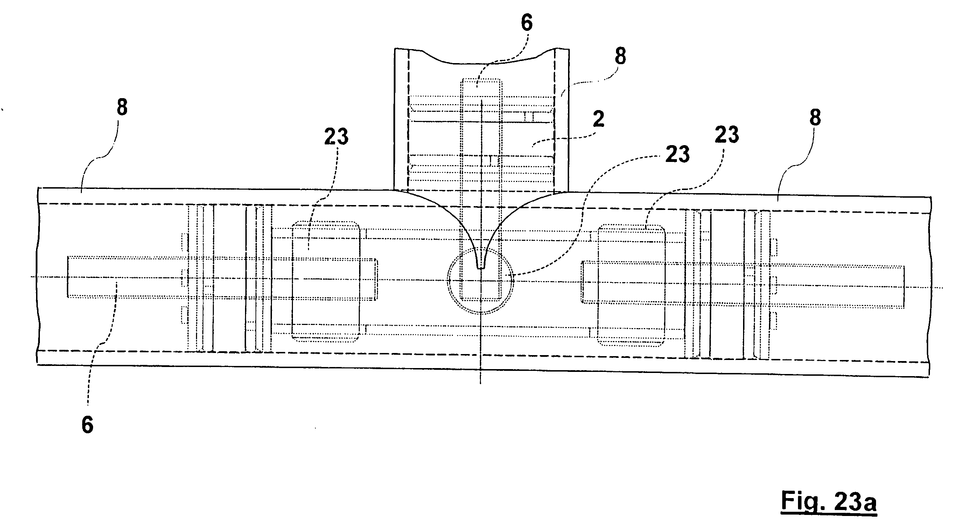

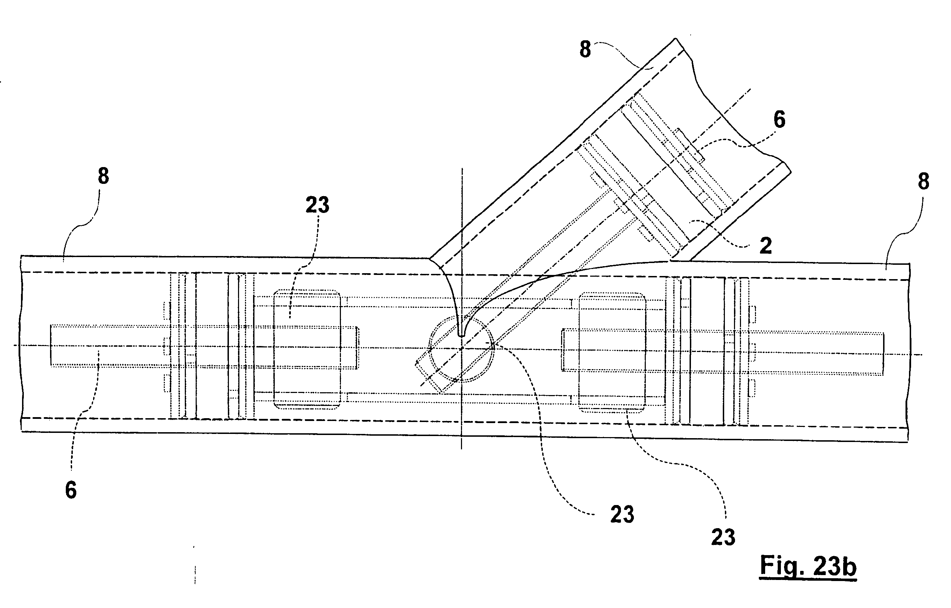

Fig.23 eine kreuzförmige Rohrverbindung mit einem ersten Verbindungselement,
Fig.23a eine T- förmige Rohrverbindung mit einem mit einem Gehrungsschnitt mit beidseitig gleichem angeformten Radius versehenen Rohrende,
Fig.23.b eine stumpfwinklige Rohrverbindung mit einem Rohrende mit einem Gehrungsschnitt mit unterschiedlichen Radien,

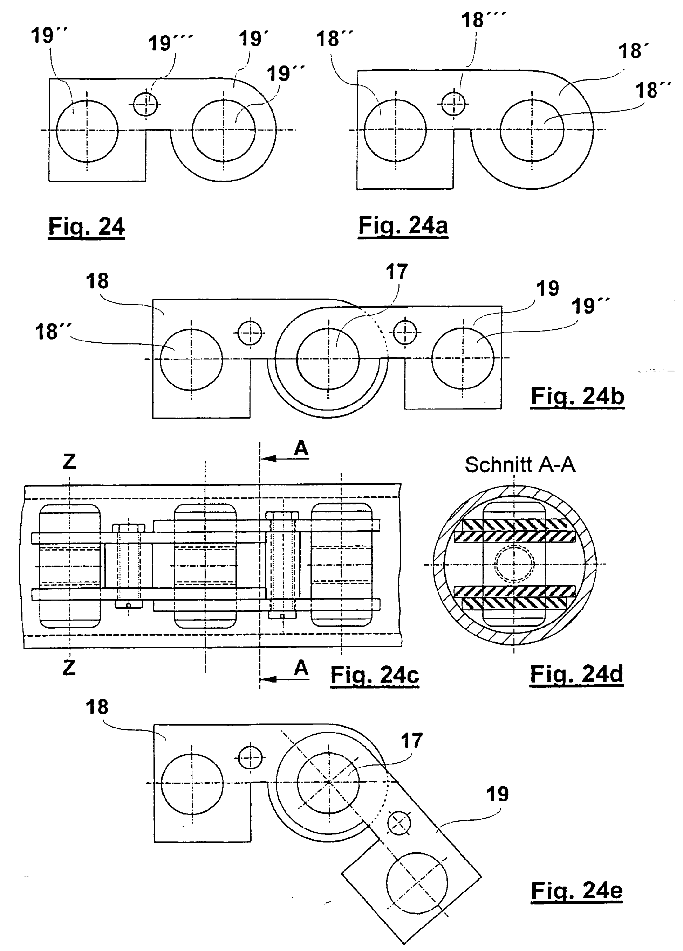

Fig.24 die Vorderansicht eines Segments eines Gelenkschenkels des zweiten radial schwenkbaren Verbindungselements,
Fig.24a die Vorderansicht eines Segments eines zweiten Gelenkschenkels des zweiten radial schwenkbaren Verbindungselements,
Fig.24b die Vorderansicht eines montierten mit Gelenkbolzen versehenen zweiten radial schwenkbaren Verbindungselements in geradliniger Darstellung,
Fig.24c die Draufsicht auf einen Ausschnitt eines montierten, zweiten radial schwenkbaren Verbindungselements in geradliniger Darstellung in zwei aneinander gefügten Rohren,
Fig.24d eine Seitenansicht vom Schnitt A- A aus Fig.24c,
Fig.24e die Vorderansicht eines montierten mit Gelenkbolzen versehenen, zweiten radial schwenkbaren Verbindungselements in einer stumpfwinkligen Darstellung,

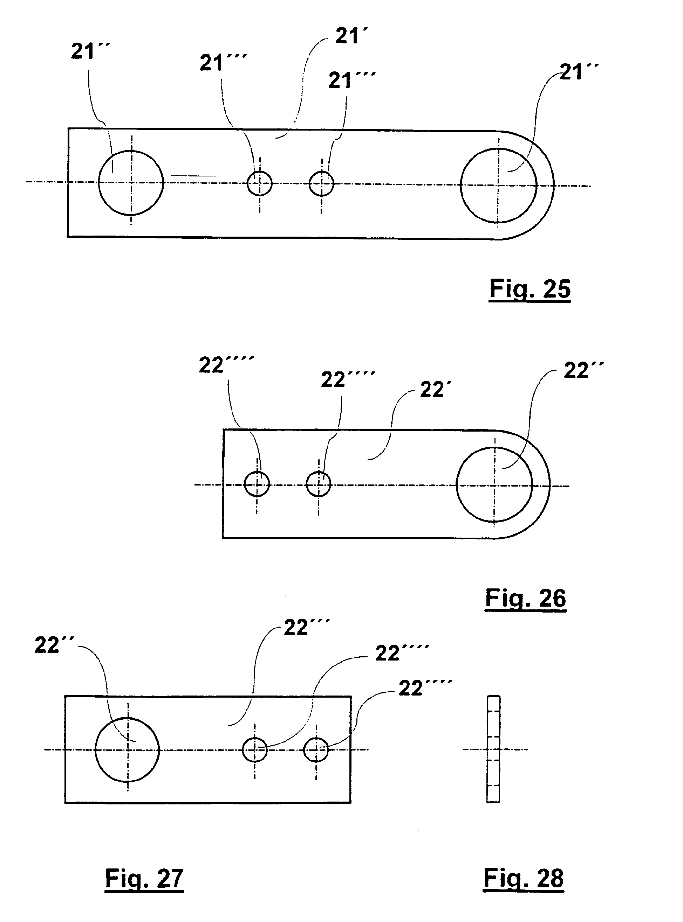

Fig.25 die Vorderansicht eines Segments eines Gelenkschenkels eines zweiten radial schwenkbaren Verbindungselements in einer zweiten Ausführung,

Fig.26 die Vorderansicht eines Segments des anderen Gelenkschenkels,
Fig.27 die Vorderansicht eines zweiten Segments des anderen Gelenkschenkels,
Fig.28 die Seitenansicht eines Segments der Gelenkschenkel,

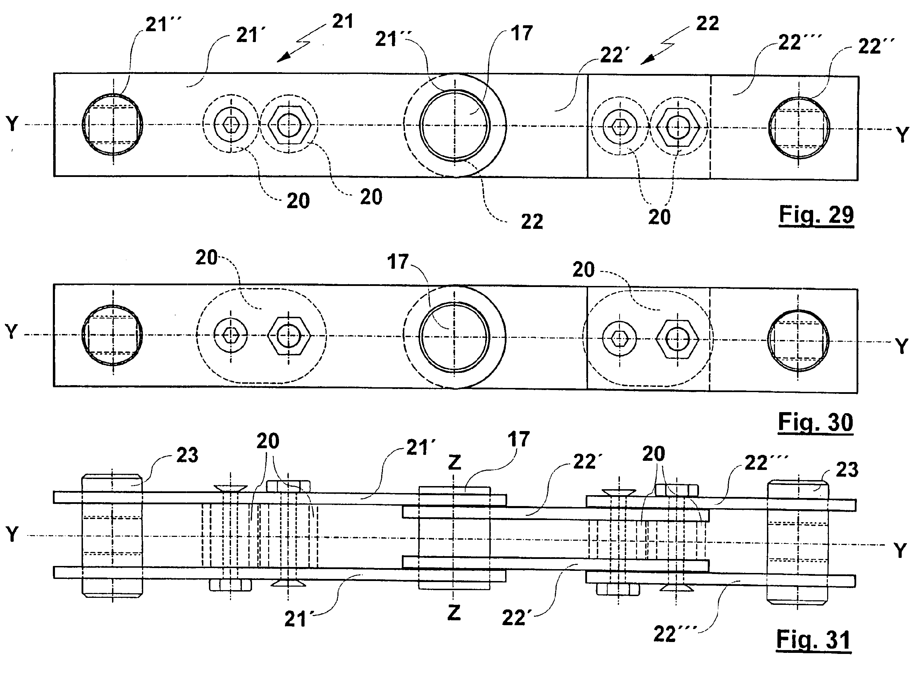

Fig.29 die Vorderansicht eines montierten mit Gelenkbolzen versehenen zweiten radial schwenkbaren Verbindungselements in der zweiten Ausführung mit mehreren Abstandsegmenten in geradliniger Darstellung,

Fig.30 eine zweite Vorderansicht eines montierten mit Gelenkbolzen versehenen zweiten radial schwenkbaren Verbindungselements in der zweiten Ausführung mit einem Abstandsegment in geradliniger Darstellung,

Fig.31 die Draufsicht auf Fig. 29,

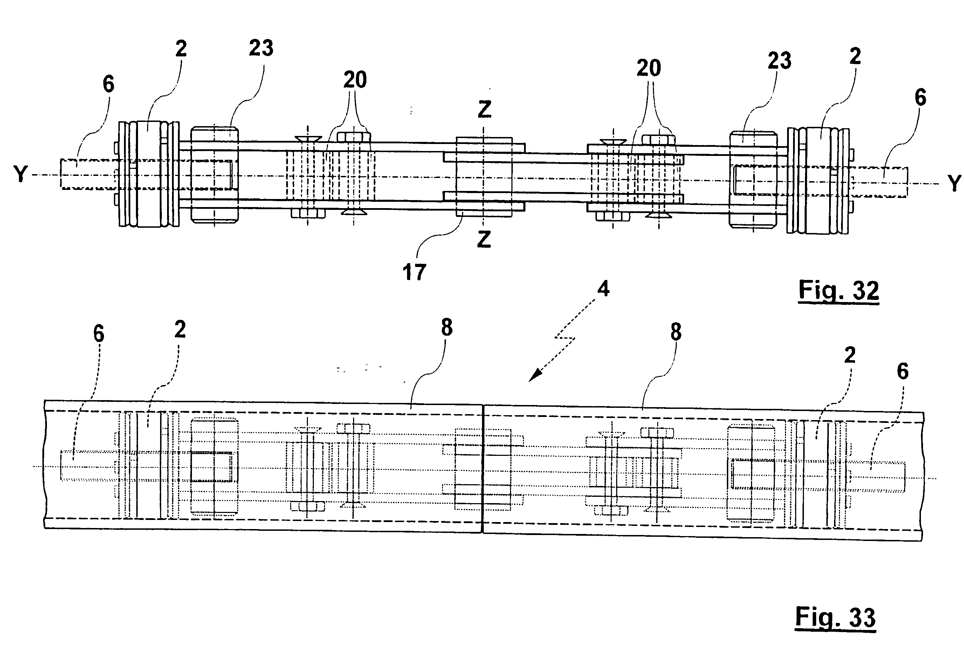

Fig.32 die Draufsicht auf Fig. 29 mit über Gewindebolzen angeordnetem ersten zylindrischen Klemmsystemen,
Fig.33 die Draufsicht auf eine winkelförmige Rohrverbindung,

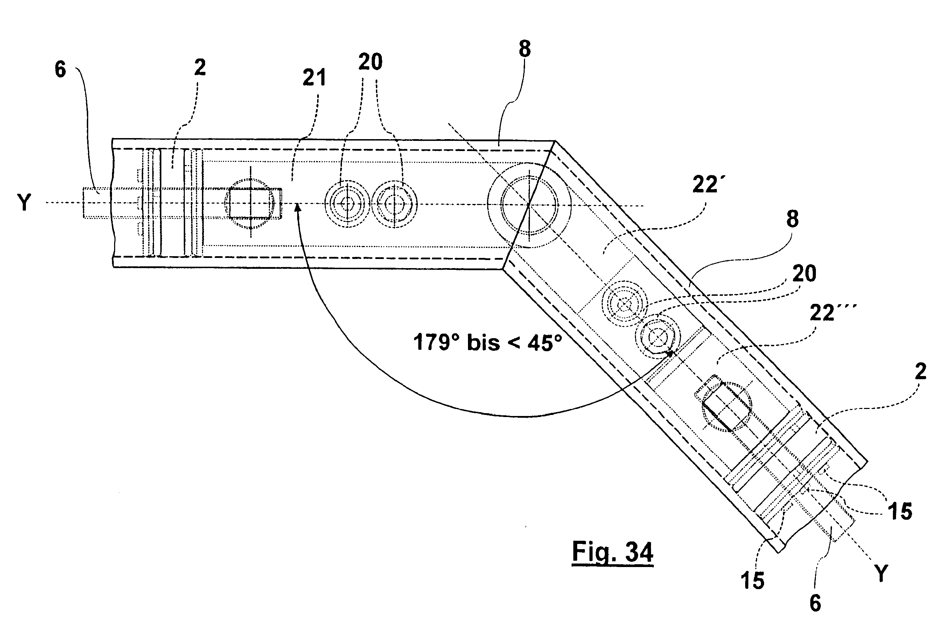

Fig.34 die Vorderansicht einer winkelförmigen Rohrverbindung in einer stumpfwinkligen Darstellung

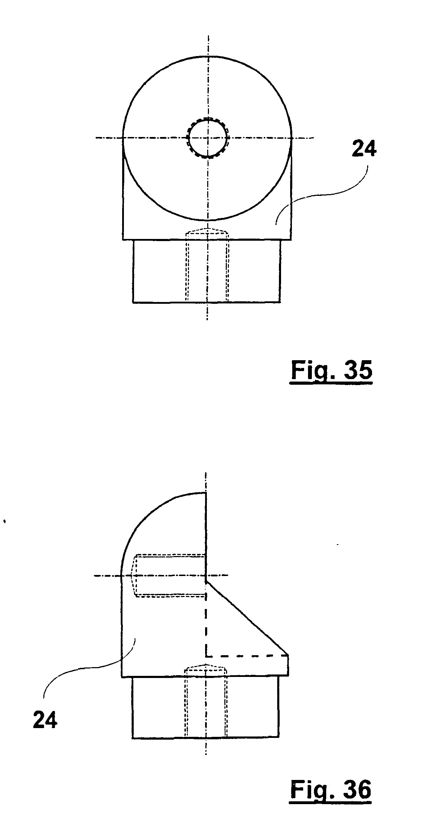

Fig.35 die Vorderansicht eines Winkelstücks mit zentrischer Gewindebohrung,
Fig.36 die Seitenansicht von Fig.35,

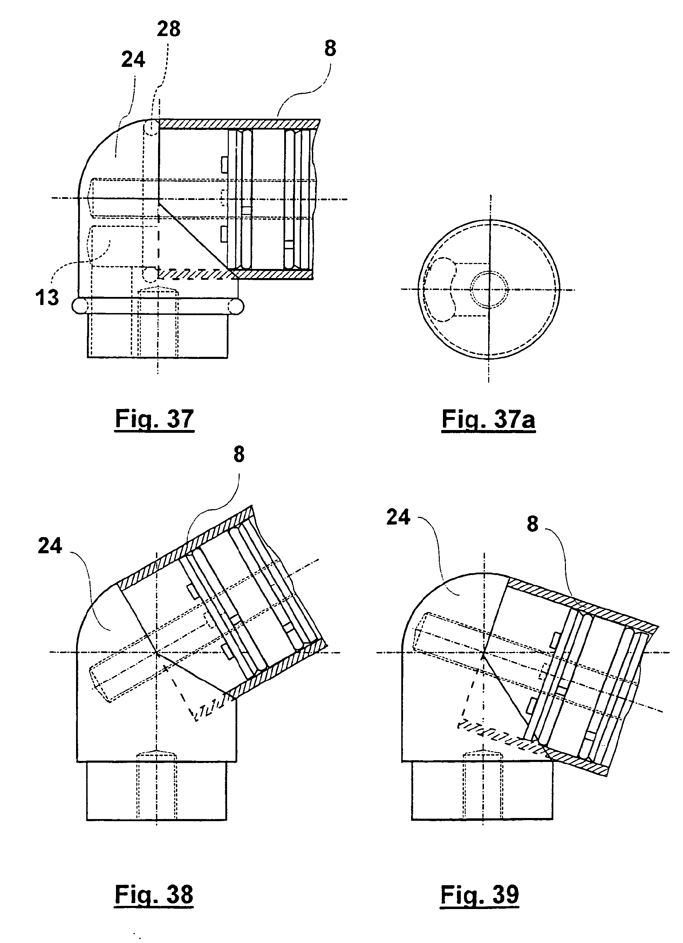

Fig.37 Vorderansicht einer stumpfen 90°- Rohrverbindung mit erstem zylindrischen Klemmsystem, Dichtungselement, Gewindebolzen und mit einem Winkelstück mit Durchgangskanal,
Fig.37a die Draufsicht von Fig.37,
Fig.38 8 eine 120°- Rohrverbindung ohne Dichtungselement und Durchgangskanal,
Fig.39 eine 45°- Rohrverbindung von Fig.38,

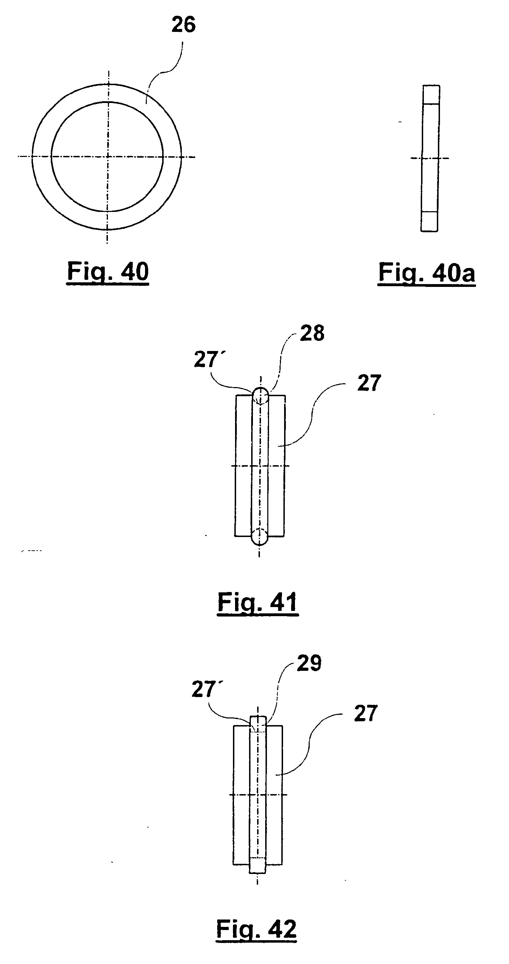

Fig.40 Vorderansicht eines zylindrischen Dichtungsrings,
Fig.40a Seitenansicht von Fig.40,
Fig.41 Vorderansicht eines Dichtungselements aus einem Metallring mit konkaver Mantelfläche und aufsitzendem O- Ring,
Fig.42 Vorderansicht eines Dichtungselements aus einem Metallring mit rechteckiger Mantelfläche und zylindrischem Metalldichtungsring,

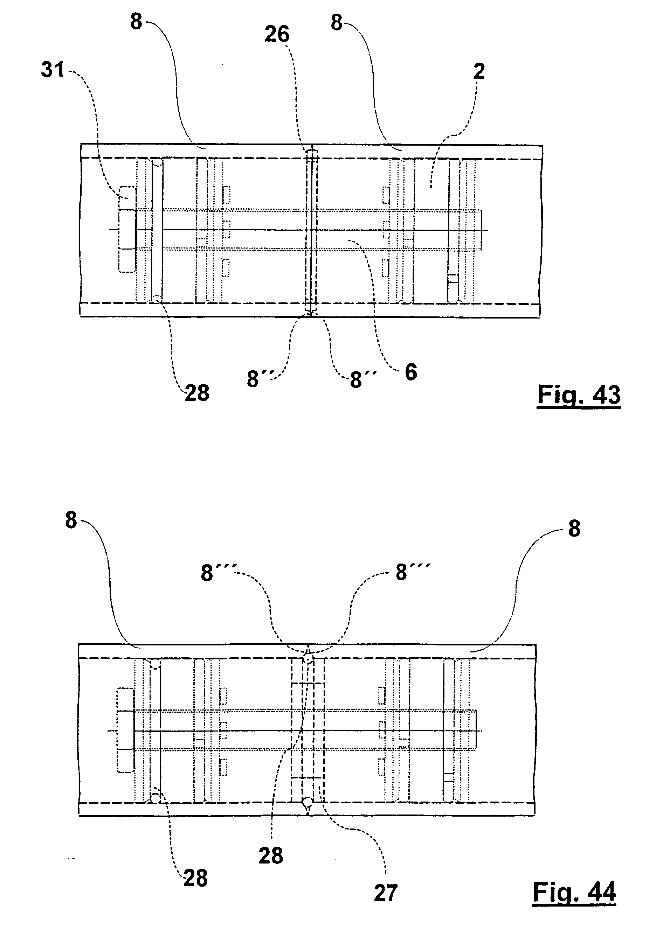

Fig.43 Vorderansicht einer geradlinigen Rohrverbindung mit einstufiger Fase und anschließender Senkung an den Rohrenden und einem zylindrischen Dichtungsring,
Fig.44 Vorderansicht einer geradlinigen Rohrverbindung mit zweistufig angefasten Rohrenden und einem Metallring mit konkaver Mantelfläche und aufsitzendem O- Ring als Dichtungselement,

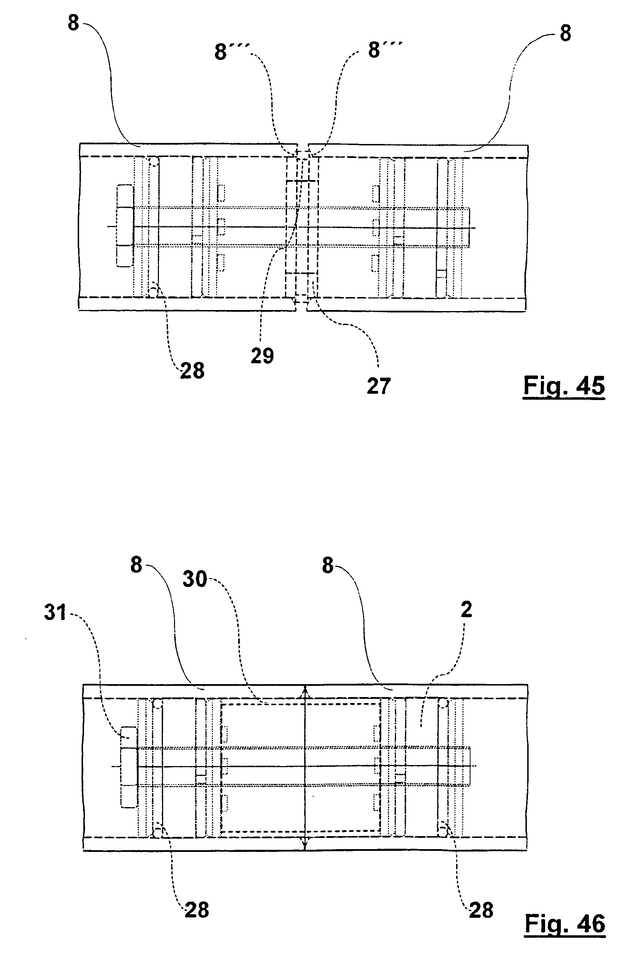

Fig.45 Vorderansicht einer geradlinigen Rohrverbindung mit zweistufig angefasten Rohrenden und einem Metallring mit rechteckig eingeformter Mantelfläche und aufsitzendem zylindrischem Ring als Dichtungselement,
Fig.46 Vorderansicht einer geradlinigen Rohrverbindung mit zweistufig angefasten Rohrenden und einer zylindrischen Dichthülse als Dichtungselement,

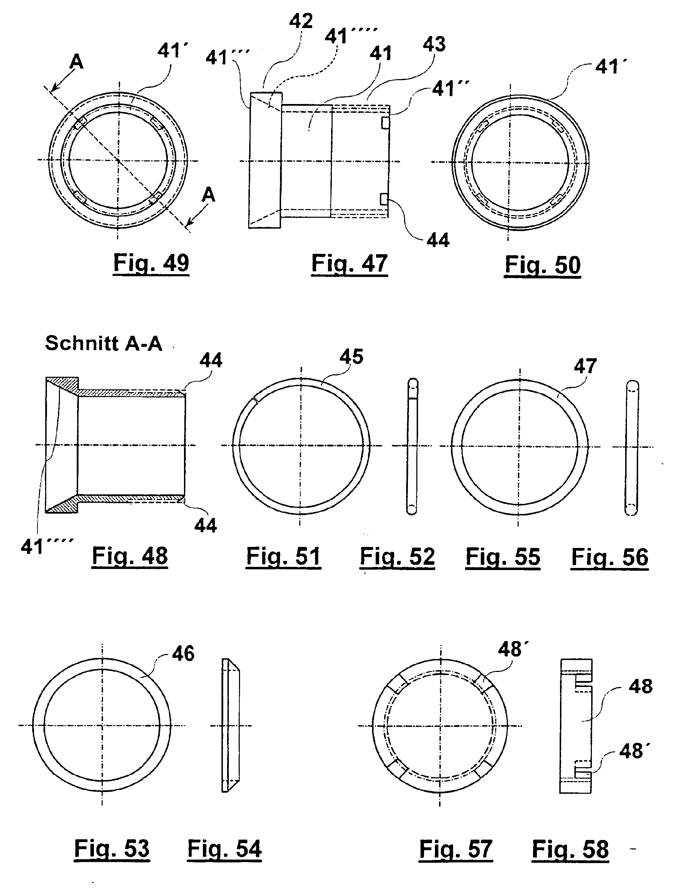

Fig.47 Vorderansicht des Aufnahmezylinders eines zweiten zylindrischen Klemmsystems,
Fig.48 Schnitt A - A aus Fig.47,
Fig.49 eine Seitenansicht des Aufnahmezylinders,
Fig.50 die gegenüberliegende Seitenansicht des Aufnahmezylinders,
Fig.51 Vorderansicht eines Spannrings,
Fig.52 Seitenansicht des Spannrings
Fig.53 Vorderansicht eines Kegelrings,
Fig.54 Seitenansicht des Kegelrings,
Fig.55 Vorderansicht eines Dichtungsrings,
Fig.56 Seitenansicht des Dichtungsrings,
Fig.57 Vorderansicht einer Ringmutter,
Fig.58 Seitenansicht der Ringmutter,

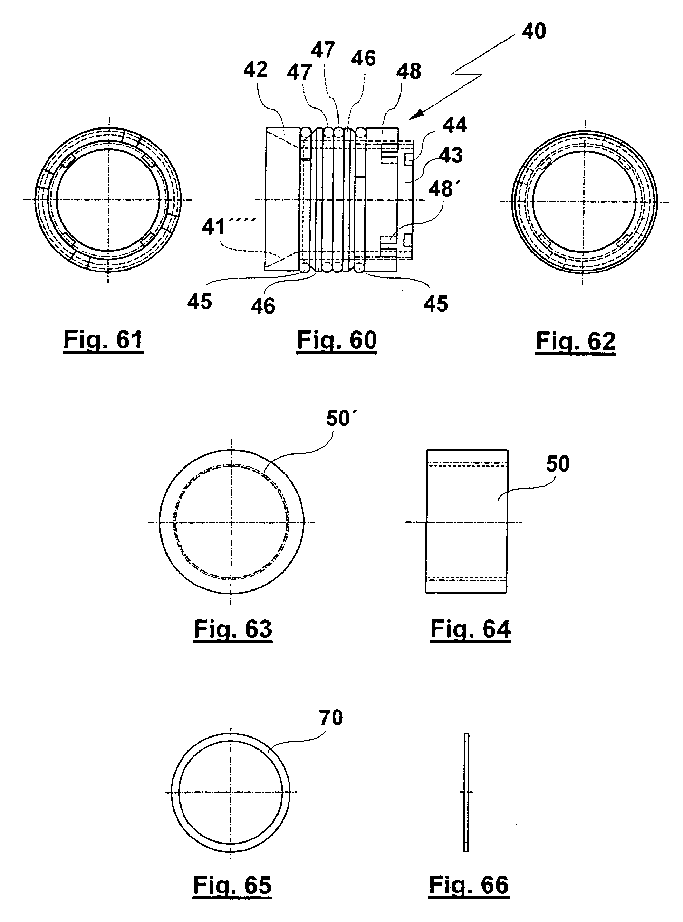

Fig.60 Vorderansicht eines unverspannten zweiten Klemmsystems,
Fig.61 eine Seitenansicht des unverspannten zweiten Klemmsystems,
Fig.62 die gegenüberliegende Seitenansicht des unverspannten zweiten zylindrischen Klemmsystems,
Fig.63 Seitenansicht einer Innenrohrmuffe,
Fig.64 Vorderansicht der Innenrohrmuffe,
Fig.65 Seitenansicht einer Scheibendichtung,
Fig.66 Vorderansicht einer Scheibendichtung,

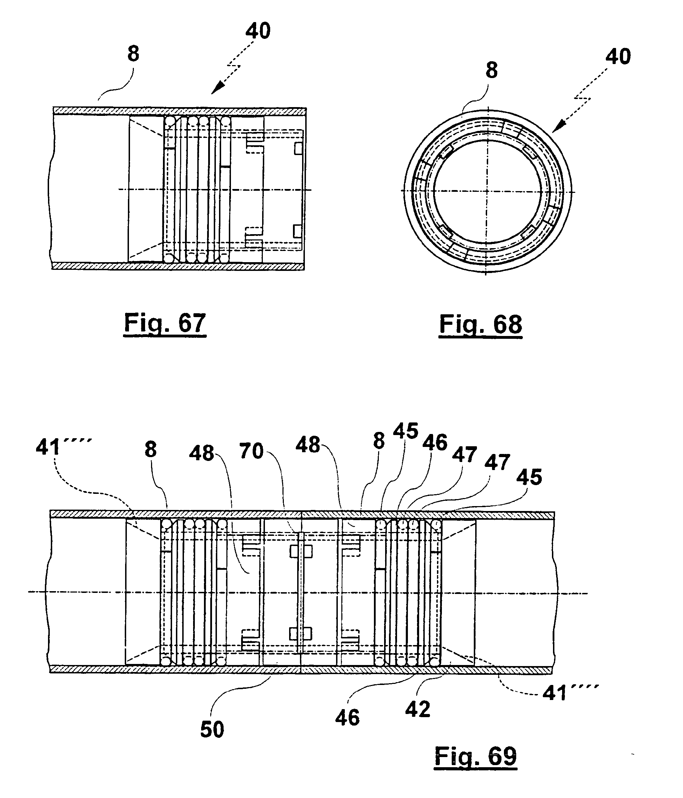

Fig.67 Vorderansicht eines geschnittenen Rohrstücks mit vormontiertem zweiten zylindrischen Klemmsystem,
Fig.68 Seitenansicht eines Rohrstoßes mit vormontiertem zweiten zylindrischen Klemmsystem,
Fig.69 Vorderansicht eines Schnitts durch eine erfindungsgemäß verschraubte Rohrverbindung mit zweiten zylindrischen Klemmsystemen,

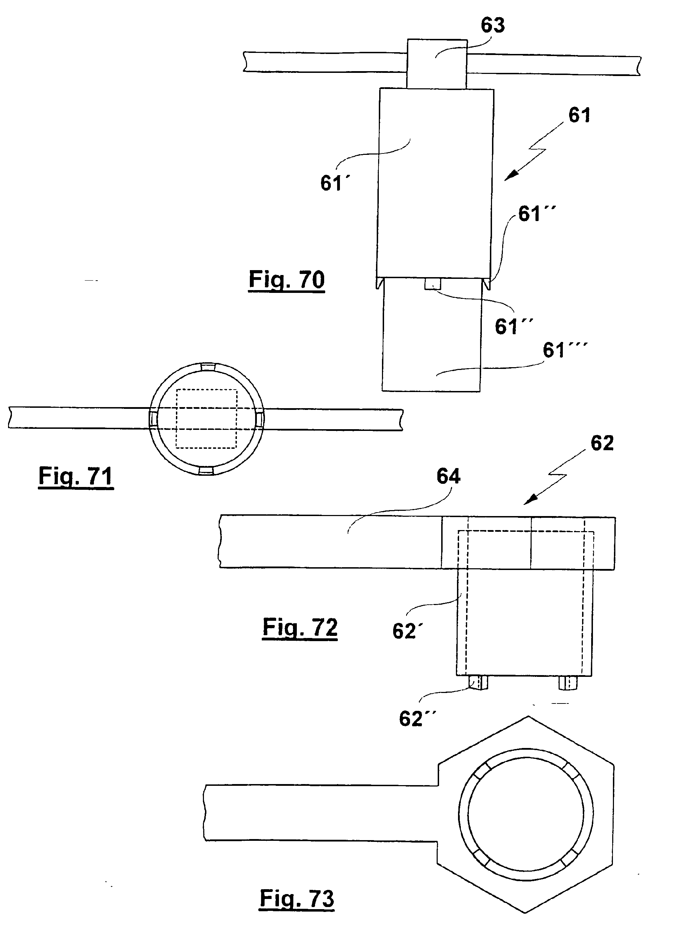

Fig.70 Vorderansicht des inneren Ringsteckschlüssels,
Fig.71 eine Draufsicht auf den inneren Ringsteckschlüssel,
Fig.72 Vorderansicht des äußeren Ringsteckschlüssels,
Fig.73 eine Draufsicht au den äußeren Ringsteckschlüssel,

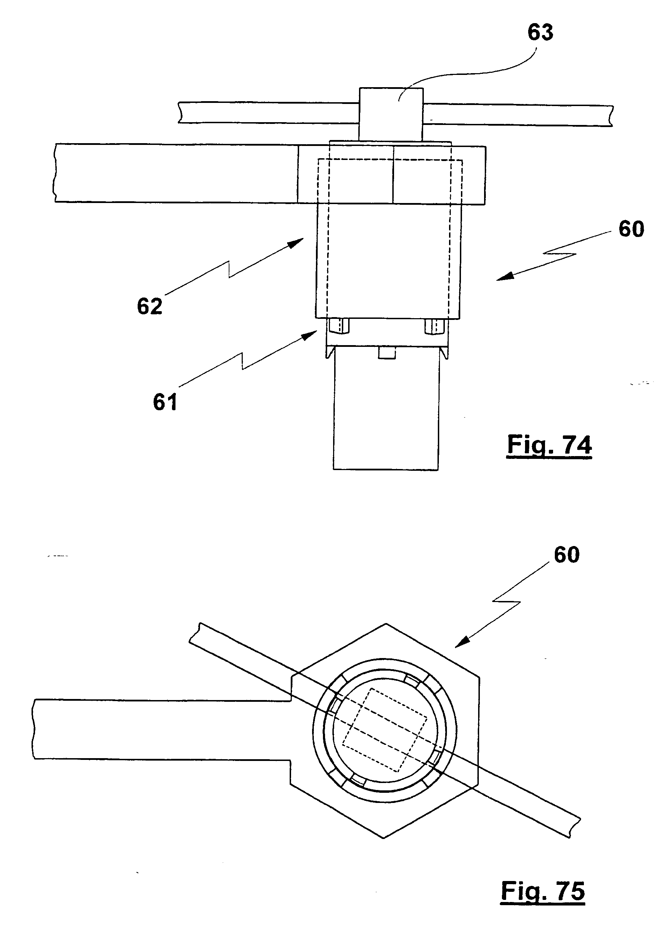

Fig.74 Vorderansicht des komplettierten Konterschlüssels,
Fig.75 Draufsicht auf den komplettierten Konterschlüssel.

Das erfindungsgemäße Universal- Verbindungselement 1 besteht in einem ersten Beispiel aus einem ersten zylindrischen Klemmsystem 2 mit den dazugehörigen Einzelteilen gemäß der Figuren 1, 2, 3, 4, 5, 6, 7 und 8. Eine Aufnahmeringscheibe 9, eine Ringscheibe 11 und eine Endringscheibe 12, gemäß der Fig. 9 und 10 weisen vorzugsweise einen Außendurchmesser von 35 mm auf. Die Aufnahmeringscheibe 9 und die Endringscheibe 12 sind beispielsweise 5 mm stark an ihrer Außenfläche plan und an der gegenüberliegenden Fläche ist jeweils am Kreisumfang eine Fase von vorzugsweise 30° bis 45° zum Scheibenmittelpunkt angeordnet. Die Aufnahmeringscheibe 9 ist darüber hinaus an ihrer angefasten Fläche mittig mit einem rechtwinklig zur angefasten Fläche angeformten Hohlzylinder 9' mit einer vorzugsweisen Länge von 20 mm und einem äußeren Durchmesser von 14 mm ausgestattet in dem ein durchgehendes Innengewinde 9" der vorzugsweisen Größe M 10 rechtsläufig angeordnet ist. Die Ringscheibe 11 ist vorzugsweise in einer Länge von 8 mm ausgeführt und wie die Endringscheibe 12 darüber hinaus mit einem inneren Ringdurchmesser von 14 mm ausgestattet. Auf den Hohlzylinder 9' werden in der Reihenfolge ein Spannring 10 vorzugsweise aus Rundmaterial von 3 bis 3,2 mm Durchmesser, einem äußeren Ringdurchmesser im ungespannten Zustand von beispielsweise 35 bis 35,2 mm und mit einem Spreizwinkel von vorzugsweise 30° bis 45°, die Ringscheibe 11, ein zweiter Spannring 10 und eine Endringscheibe 12 aufgesteckt, wobei die Spannringe 10 in den Fasen der Aufnahmeringscheibe 9 und der Endringscheibe 12 lagern. Die Aufnahmeringscheibe 9, die Ringscheibe 11 und die Endringscheibe 12 sind in einer Ausführungsvariante vorzugsweise mit jeweils drei im gleichmäßigen Abstand und in gleichmäßiger Form und Größe ausgeführten, über die Ringflächen verteilten, vorzugsweise in Langlochform ausgeführten, und axial verlaufenden Durchgangsöffnungen 13 und mit beispielsweise drei um vorzugsweise 120° versetzten, zwischen den Durchgangsöffnungen 13 angeordneten Durchgangsbohrungen 14 mit einem Durchmesser von vorzugsweise 5,3 mm ausgestattet, wobei die Durchgangsbohrungen 14 der Aufnahemringscheibe 9 ein Innengewinde 14' von beispielsweise M 5 aufweisen. Die in der aufgeführten Reihenfolge zusammengesteckten Teile, werden, gemäß Fig.11, mit den von der Endringscheibe 12 eingeführten Spannschrauben 15, für die beispielsweise Maschinenschrauben mit vorzugsweise 4 mm in Inbusausführung und einem Außengewinde von 5,3 mm verwendet wurden, über die Durchgangsbohrungen 14 mit dem Innengewinde 14' der Aufnahmeringscheibe 9 lösbar verbunden, wodurch die in Fig. 11 und den übrigen Fig. 9 und 10 aus Gründen der Übersichtlichkeit vernachlässigten Durchgangsöffnungen 13 deckungsgleich übereinander liegen und Kanäle 2' bilden. Ein nach Fig.11 vormontiertes erstes zylindrisches Klemmsystem 2 wird nun mit den Spannschrauben 15 zur Stirnseite zeigend in ein Rohr 8 mit einem vorzugsweisen Innendurchmesser von 36 mm und einer Wandstärke von 2 mm gesteckt. Die Spannschrauben 15 werden mit einem Inbusschlüssel der Größe 4 mm festgezogen, wodurch die Spannringe 10 in einem vorzugsweisen Spreizwinkel von 30° bis 45° auseinander gedrückt und gegen die Innenwand des Rohrs 8 radial angepreßt werden. In das Innengewinde 9" des Hohlzylinders 9' des ersten zylindrischen Klemmsystems 2 kann nun durchgehend oder beidseitig ein Gewindebolzen 6 eingeschraubt werden, der eine geradlinige Verbindung zwischen zwei, auf die zuvor beschriebene Weise, mit ersten zylindrischen Klemmsystemen 2 bestückten Rohren 8 dient. Ein solche Ausführungsform für eine geradlinige Rohrverbindung die gleichzeitig als Endstück dargestellt ist, zeigt Fig.43, wobei die beiden Rohrenden mit einer einstufigen Fase 8" bis vorzugsweise 10° und einer anschließenden rechtwinkligen Senkung von 1 mm Tiefe und Breite versehen sind und mit einer zylindrischen Ringscheibe 26 vorzugsweise aus einem säurebeständigen Material abgedichtet verbunden sind. Die angefasten Rohrenden dichten den Rohrstoß zusammen mit der zylindrischen Ringscheibe 26 so dicht ab, daß diese Form des Universal- Verbindungssystems 1 für Rohrsysteme verwendet werden kann, die beispielsweise flüssige Medien führen, wobei der Medienfluß jeweils durch die in den ersten zylindrischen Klemmsystemen 2 angeordneten Kanäle 2' gewährleistet ist.

Ein zweites Beispiel des Universal- Verbindungssystems 1 ist durch ein erstes zylindrisches Klemmsystem 2 mit einer Ringscheibe 11, nach Fig.3a und Fig.4a, gekennzeichnet, wobei die Ringscheibe 11 in einer vorzugsweisen Länge von 20 mm ausgeführt und mit einer radialen Durchgangsgewindebohrung 11" der vorzugsweisen Größe M 10 mit Senkungen 11"' in den Mantelflächen sowie mit vorzugsweise zwei axialen Durchgangsöffnungen 13 ausgestattet ist. Ein mit dieser Ringscheibe 11 in der vorher beschriebenen Reihenfolge montiertes erstes zylindrisches Klemmsystem 2 ist durch einen zentrisch durch dieses erste zylindrische Klemmsystem 2 verlaufenden Gewindebolzen 6 mit Außengewinde erstes M 10 und auf dessen beiden freien Enden aufgeschraubte Muttern 6' mit Innengewinde M 10, gemäß Fig. 9a und 11a, lösbar miteinander verbunden. In die radiale Gewindedurchgangsbohrung 11" können ein- oder beidseitig Gewindebolzen 6 gemäß Fig.11b eingeschraubt werden, wodurch nur mit einem ersten zylindrischen Klemmsystem 2 eine geradlinige, T- förmige oder kreuzweise Verbindung hergestellt werden kann.

Ein drittes Beispiel des Universal- Verbindungssystems 1 ist durch die Kopplung von ersten zylindrischen Klemmsystemen 2 mit einem ersten Verbindungselement 3, nach Fig.12 bis Fig.14, gekennzeichnet. Ein erstes Verbindungselement 3 ist beispielsweise aus einem 98 mm langem Vierkanthohlprofil mit einer jeweiligen Seitenlänge von 25 mm und offenen und rechtwinklig ausgeführten Stirnseiten gefertigt. In seinen Flächen sind, gemäß Fig.14, jeweils endseitig Lagerstellen 16" mit einem vorzugsweisen Durchmesser von 16,1 mm gegenüberliegend angeordnet. Jeweils zwischen den endseitig angeordneten Lagerstellen 16" ist gegenüberliegend ein Langloch 16'" mit einer vorzugsweisen Breite von 16,2 mm und einer Länge von 50 mm eingeformt. Darüber hinaus verfügt das erste Verbindungselement 3 über zwei weitere mittig gegenüberliegend und kreuzweise zu den endseitigen Lagerstellen 16" angeordnete Lagerstellen 16" mit vorzugsweise dem gleichen Durchmesser wie die endseitigen Lagerstellen 16". In die endseitigen und mittigen Lagerstellen 16" können bedarfsweise Gelenkbolzen 23 nach Fig. 15 mit einer vorzugsweisen Länge von 32 mm, einem Durchmesser von 16 mm und einer mittigen radialen Gewindedurchgangsbohrung 23' der Größe M 10, nach Fig.16, eingesteckt und mit Gewindebolzen 6 versehen werden. Fig.17 und 18 zeigen die Ausstattung eines ersten Verbindungselements 3 mit drei Gelenkbolzen 23 und an diesen angeordneten Gewindebolzen 6 in zwei Ansichten, wobei der mittig angeordnete Gewindebolzen 6 rechtwinklig ausgerichtet und auf die endseitigen Gewindebolzen 6 jeweils ein erstes zylindrisches Klemmsystem 2 aufgeschraubt ist. In Fig. 19 sind auch die beiden Enden des mittig angeordneten Gewindebolzens 6 mit ersten zylindrischen Klemmsystemen 2 versehen, um die Vielseitigkeit der Anwendungsmöglichkeiten dieses ersten Verbindungselements 3 zu zeigen.

Mit diesem nach unterschiedlichen Erfordernissen vormontierten Universal-Verbindungssystem 1 können verschiedene geradlinige Rohrverbindungen nach Fig.20, eine T- förmigen Rohrverbindung nach Fig.21 und Fig. 23a und eine gekreuzte Rohrverbindung nach Fig.23 einfach montiert werden.

Ein Beispiel einer T- förmigen Verbindung mit einem bedarfsweise einstellbaren spitzen oder stumpfen Winkel zur Achse X eines Rohrs mit einem Element 7, hier beispielsweise mit einem Vollprofil 25, ist in Fig.22 dargestellt, wobei das, mit dem mittleren Gelenkbolzen 23 und dem endseitig angeordneten Gewindebolzen 6 sowie mit dem ersten zylindrischen Klemmsystemen 2, vormontierte erste Verbindungselement 3 in ein Rohr 8 eingeführt wird, das in seinem Rohrmantel mit einer schräg ausgeführten Durchgangsöffnung 8' ausgestattet ist, die etwas größer als der Außendurchmesser des Gewindebolzens 6 und fallweise auch elliptisch ausgeführt sein kann. Das vormontierte Universal- Verbindungssystem 1 wird soweit in das Rohr 8 geschoben, bis der mittlere Gelenkbolzen 23 mit seiner Gewindedurchgangsbohrung 23' eine deckungsgleiche Lage mit der Durchgangsöffnung 8' des Rohrs 8 erreicht hat. Jetzt kann von außen durch die Durchgangsöffnung 8' beispielsweise das Vollprofil 25 mit einem vorzugsweise angeformten Außengewinde direkt in die Gewindedurchgangsbohrung 23" des Gelenkbolzens 23 geschraubt werden. Mit dem eingeschraubten Vollprofil 25 kann nun der mittlere Gelenkbolzen 23 um seine Bolzenachse W in einen beliebigen Neigungswinkel α im Bereich von 180° zur Achse X des ersten Verbindungselements 3 geschwenkt werden. Mit dem Schwenkvorgang des Vollprofils 25 wird das vormontierte Universal-Verbindungssystem 1 innerhalb des Rohrs 8 entlang der Achse X mit verschoben, bis die gewünschte Winkelstellung erreicht ist. Von den offenen Stirnseiten des Rohrs 8 können nun die ersten zylindrischen Klemmsysteme 2 mit dem Inbusschlüssel im Rohr 8 verspannt und das Vollprofil 25 stabil verschraubt werden. Eine in den Zeichnungen nicht näher dargestellte T-förmige Rohrverbindung kann selbstverständlich auch hergestellt werden, indem ein Rohr 8 mit geradem Schnitt über eine im Rohrmantel des anderen Rohrs 8 angepaßt eingearbeitete Durchgansöffnung 8' in das Rohr 8 hineingesteckt und über die ersten zylindrischen Klemmsysteme 2 arretierbar ist. Die gleichartige T-förmige Rohrverbindung mit bedarfsweise einstellbarem spitzen oder stumpfen Winkel zur Achse X mit beispielsweise einem Rohr 8, daß mit einem Gehrungsschnitt mit angeformten Radius augestattet ist, ist in Fig. 23b dargestellt.

Ein viertes Beispiel des Universal- Verbindungssystems 1 besteht aus einer Kopplung von ersten zylindrischen Klemmsystemen 2 mit einem zweiten radial schwenkbaren Verbindungselement 4, das aus zwei Gelenkschenkeln 18 und 19 gebildet ist, die durch einen Gelenkbolzen 17 verbunden und radial um eine Bolzenachse Z schwenkbar sind. Das zweite radial schwenkbare Verbindungselement 4 ermöglicht winkelförmige Rohrverbindungen in einem Bereich von vorzugsweise 179° bis < 45° zu den Gelenkschenkelachsen Y. Die Gelenkschenkel 18 und 19 in einer kompakten Ausführungsvariante sind jeweils aus einem vorzugsweise 62 mm langen und 31 mm breiten Segment 18' und einem 60 mm langen und 27 mm breiten Segment 19' nach Fig. 24 und 24a gebildet, die einerseits vorzugsweise als geschlossene einseitig eingekerbte Ösen und andererseits rechteckig ausgebildet sind, wobei die als geschlossene einseitig eingekerbte Öse ausgebildete Stirnseite des Segments 18' vorzugsweise mit einem Radius von 15,5 mm und die des Segments 19' mit einem kleineren Radius von 13,5 mm ausgeführt sind. An den Segmenten 18' und 19' sind jeweils endseitig Lagerstellen 18" oder 19" mit einem Durchmesser von vorzugsweise 16 mm eingeformt und etwa mittig ein Durchgangsloch 18"' und 19"' mit einem vorzugsweisen Durchmesser von 6 mm angeordnet. Jeweils zwei Segmente 18' und zwei Segmente 19' sind mit Hilfe von je einem Abstandsegment 20 und einer herkömmlichen Schraubverbindung gegenüberliegend so miteinander verbunden, daß sich die Lagerstellen 18" und Lagerstellen 19" und die abgerundeten Stirnseiten der Segmente 18' und 19' deckungsgleich gegenüberliegen, wodurch durchlässige Schenkel 18 und 19, gemäß Fig.24e, entstehen. Die Lagerstellen 18" und 19" an den, als geschlossene einseitig eingekerbte Öse abgerundeten, Stirnseiten der Gelenkschenkel 18 und 19 sind durch einen vorzugsweise mit Paßsitz angeordneten Gelenkbolzen 17 mit einem Durchmesser von 18 mm miteinander verbunden und um die Bolzenachse Z radial schwenkbar. In Fig.24b ist eine Vorderansicht des beschriebenen vormontierten zweiten radial schwenkbaren Verbindungselements 4 ohne Gelenkbolzen 23 dargestellt. Fig.24c zeigt eine Draufsicht auf ein zweites radial schwenkbares Verbindungselement 4 mit Gelenkbolzen 23 in einer Verbindung von zwei Rohren 8 und Fig.24d einen Schnitt A-A durch die Rohrverbindung in Fig.24c. In der Schnittdarstellung ist sehr gut zu erkennen, wie die Segmente 18' und 19' der Gelenkschenkel 18 und 19 in dem Rohr 8 lagern und daß sie zusätzlich zu der radialen Spannung über die nicht näher dargestellten ersten zylindrischen Klemmsysteme 2 eine Arretierung des zweiten radial schwenkbaren Verbindungssystems 4 innerhalb der Rohre 8 gewährleisten. Fig. 24e zeigt eine Anordnung des zweiten radial schwenkbaren Verbindungselements 4 ohne Anschlußstellen 5 in einem stumpfen Winkel zu den Gelenkschenkelachsen Y mit der eine eben solche Rohrverbindung durch angekoppelte erste zylindrische Klemmsysteme 2 herstellbar ist.

In den Figuren 25 bis 28 ist eine zweite Ausführung des zweiten radial schwenkbaren Verbindungselements 4 mit verlängerter Schenkelausführung dargestellt, die aus einem einteiligen Gelenkschenkel 21 und einem zweiteiligen Gelenkschenkel 22 gebildet ist, die durch einen Gelenkbolzen 17 miteinander verbunden und um die Bolzenachse Z radial schwenkbar sind. Der Gelenkschenkel 21 ist aus zwei vorzugsweise 120 mm langen und 27 mm breiten Segmenten 21' gemäß Fig. 25 gebildet, die an einer Stirnseite abgerundet und an der gegenüberliegenden Stirnseite rechteckig ausgebildet sind. Außerdem ist an jedem Segment 21' jeweils endseitig eine Lagerstelle 21" eingeformt und etwa mittig zwei Durchgangslöcher 21"' mit einem vorzugsweisen Durchmesser von 6 mm angeordnet. Der Gelenkschenkel 22 ist aus jeweils zwei, vorzugsweise 81 mm langen und 27 mm breiten Segmenten 22', gemäß Fig.26, und zwei, vorzugsweise 71 mm langen und 27 mm breiten Segmenten 22"', gemäß Fig. 27, gebildet. Die Segmente 22' sind jeweils an einem Ende mit einer Lagerstelle 22" mit einem vorzugsweisen Durchmesser von 18 mm an den abgerundeten Stirnseiten von vorzugsweise 16 mm an den rechteckig ausgebildeten Stirnseiten und am gegenüberliegenden Ende mit jeweils zwei Durchgangslöchern 22"" mit einem vorzugsweisen Durchmesser von 6 mm ausgestattet. Jeweils ein Segment 22' und ein Segment 22'" sind über die Durchgangslöcher 22"" und herkömmliche Schraubverbindungen miteinander verbunden. Jeweils zwei Segmente 21' und zwei vormontierte Segmente 22' mit 22'" sind mit Hilfe von vorzugsweise jeweils zwei Abstandsegmenten 20 gegenüberliegend so miteinander verbunden, daß sich die Lagerstellen 21" und Lagerstellen 22" und die abgerundeten Stirnseiten der Segmente deckungsgleich gegenüberliegen, wodurch die Schenkel 21 und 22 gebildet sind. Die Lagerstellen 21" und 22" an den abgerundeten Stirnseiten der Gelenkschenkel 21 und 22 sind durch einen mit Paßsitz angeordneten Gelenkbolzen 17 mit einem vorzugsweisen Durchmesser von 18 mm miteinander verbunden und um die Bolzenachse Z radial schwenkbar.

Ein so vormontiertes zweites radial schwenkbares Verbindungselement 4 ist in den Fig. 29 bis 31 näher dargestellt, wobei Fig. 29 eine Vorderansicht mit geteilten Abstandsegmenten 20 und Fig.30 ein einstückig ausgebildetes Abstandsegment 20 zeigt. In Fig.31 ist eine Draufsicht auf das vormontierte zweite radial schwenkbare Verbindungselement 4 nach Fig.29 zu sehen, das jeweils endseitig mit einem Gelenkbolzen 23 bestückt ist. Die Gelenkbolzen 23 sind wiederum, wie in Fig.32, zu sehen, über Gewindebolzen 6 mit jeweils einem ersten zylindrischen Klemmsystem 2 verbunden. Nun wird auf den so vormontierten einen Gelenkschenkel 21 ein Rohr 8 mit einem mit einem Gehrungsschnitt versehenen Rohrende gesteckt und das erste zylindrische Klemmsystem 2 stirnseitig festgeschraubt. Danach wird, gemäß Fig.33, ein zweites, ebenfalls mit einem Gehrungsschnitt gleichen Winkels versehenes, Rohr 8 auf den Gelenkschenkel 22 gesteckt bis die Gehrungsschnitte der Rohre 8 beispielsweise wie in Fig. 34 aneinander liegen und das weitere erste zylindrische Klemmsystem 2 stirnseitig verschraubt. Auf diese Weise kann jede Rohrverbindung in dem eingangs genannten Winkelbereich hergestellt werden. Der gleiche Montageablauf ist bei der kompakten Ausführung der Gelenkschenkel 18 und 19 vorgesehen.

Ein fünftes Beispiel, gemäß der Fig. 37 bis 39, stellt eine Rohrverbindung mit einem massiven Winkelstück 25 nach Fig.35 und 36 dar. Dabei wird ein gerade geschnittenes Rohr 8 mit einem ersten zylindrischen Klemmsystem 2 und einem Gewindebolzen 6 vormontiert und mittels des Gewindebolzens 6 in die Bohrung eines Winkelstücks 24, mit eingeformten Anschlag in einem 90° Winkel, gemäß Fig. 37, einem 45° Winkel, gemäß Fig. 39, und in einem 120° Winkel, gemäß Fig. 38, geschraubt. Diese Schraubverbindung kann selbstverständlich auch mit anderen Elementen 7 wie Rohrbögen oder Platten erfolgen. Fig. 37 zeigt außerdem eine Ausführungsform der Rohrverbindung, in der das Winkelstück 24 eine Durchgangsöffnung 13 aufweist, die einen Kanal 2' durch das Winkelstück 24 bildet und in der die stumpfen Verbindungsstellen mit einem O- Ring 28 abgedichtet sind. Diese Verbindung ist auch für Rohrverbindungen verwendbar, die gasförmige oder flüssige Medien führen.

Eine in den Zeichnungen nicht näher dargestellte Anwendungsform kann die Verbindung zwischen einem, mit einem ersten zylindrischen Klemmsystem 2 und Gewindebolzen 6 bestückten Rohr 8 sein. In dem Hohlzylinder 9' des ersten zylindrischen Klemmsystems 2 ist lediglich ein Linksgewinde angeordnet ist, wodurch beispielsweise ein herkömmliches Spannschloss durch Gewindebolzen 6 mit dem Universal- Verbindungssystem 1 verbunden und zum Verspannen von Rohr- oder anderen Systemen verwendet werden kann.

Die Figuren 40 bis 42 sind verschiedene Ausführungsformen von Dichtungselementen dargestellt. So zeigt Fig. 40 und 40a einen zylindrischen Dichtungsring 26. Fig. 41 einen Metallring 27 mit konkaver Mantelfläche 27' und aufsitzendem O- Ring 28 und Fig. 42 einen Metallring 27 mit rechteckiger Mantelfläche 27` und aufsitzendem zylindrischem Metallring 29.

In den Figuren 43 bis 46 sind Rohrverbindungen mit dem jeweils letzten Rohr 8 einer Rohrverbindung dargestellt, die flüssige oder gasförmige Medien führen, wobei jeweils das letzte erste zylindrische Klemmsystem 2 an Stelle eines Spannrings 10 ein Dichtungselement aufweist, mit dem die Rohrverbindungstelle mit Dichtungselementen, gemäß Fig.40 bis 42, abgedichtet ist, die Rohrenden unterschiedlich angefast sind und bei denen die Verbindung der ersten zylindrischen Klemmsysteme 2, anstatt mit einem Gewindebolzen 6, mit einer Maschinenschraube 31 hergestellt ist.

So zeigt Fig.43 die abgedichtete Verbindung zweier Rohre 8, deren Rohrenden mit einer zur Rohrmitte verlaufenden, vorzugsweise 1 mm breiten und in einem Winkel β von 10° ausgeführten einstufigen Fase 8" und mit einer sich anschließenden rechtwinkligen 1 mm breiten Senkung versehen sind, in der ein zylindrischer Dichtungsring 26 gemäß Fig.40 und 40a mit einem Außendurchmesser von vorzugsweise 37 mm, einem Innendurchmesser von 27 mm und einer Stärke von 2 mm sitzt, der die Verbindungsstelle der beiden Rohre 8 abdichtet. Fig. 44 zeigt eine abgedichtete Verbindung zweier Rohre 8, deren Rohrenden mit einer zum Rohrinneren verlaufenden zweistufigen Fase 8'" versehen sind, deren erste Stufe vom Rohrmantel vorzugsweise 1 mm breit und in einem Fasenwinkel von 10° und deren zweite Stufe vorzugsweise in einer Breite von 1 mm und einem Fasenwinkel von 30° ausgeführt ist und in deren zweiter Fasenstufe ein Metallring 27 mit konkaver Mantelfläche 27' und mit einem darin lagernden O- Ring 28 sitzt, wobei der Metallring mit einem Außendurchmesser von vorzugsweise 35,7 mm und einer Breite von 12 mm und dessen Mantelfläche mit einer, vorzugsweise 4,1 mm breiten und 2 mm tiefen, konkaven Nut ausgeführt ist, in der ein, der Größe der Nut entsprechender standardisierter, O- Ring 28, gemäß Fig. 41, lagert.

Fig. 45 zeigt eine gemäß Fig. 41 abgedichtete Verbindung zweier Rohre 8, deren Rohrenden gleichfalls mit einer zum Rohrinneren verlaufenden zweistufigen Fase 8"' versehen sind, wobei als Dichtungselement ein zylindrischer Metallring 27 mit einer rechteckigen Nut verwendet ist, in der beispielsweise ein zylindrischer Metallring 29 gemäß Fig. 42 lagert. Die Verbindungsstelle ist im noch nicht fest verschraubten Zustand dargestellt, weil der zylindrische Metallring 29 sich beim Verbinden der ersten zylindrischen Klemmsysteme 2 mit der Maschinenschraube 31 an die zweistufige Fase 8"' der Rohrenden anpaßt. Schließlich zeigt Fig. 46 eine weitere abgedichtete Rohrverbindungsvariante mit einer in die Rohrenden eingeführten zylindrischen Dichthülse 30 von vorzugsweise 36,1 mm Außendurchmesser und einer Wandstärke von 1,5 mm dargestellt.

Die Fig.47 bis 59 zeigen die Einzelteile eines zweiten zylindrischen Klemmsystems 40 des erfindungsgemäßen Universal- Verbindungssystems 1, das vorzugsweise für flüssige und gasförmige Medien sowie für die Kabelführung geeignete Rohrverbindungen vorgesehen ist. Bei diesem zweiten zylindrischen Klemmsystem 40 wurde ein Aufnahmezylinder 41 nach Fig.47 bis Fig.50 benutzt, der vorzugsweise 38 mm lang ist und einen Innendurchmesser von 25 mm aufweist, an dessen einem äußeren Ende 41"' ein Bund 42 mit einem Durchmesser von 35,5 mm und eine Länge von 8 mm radial angeformt ist, dessen Innenfläche eine konkav zum gegenüberliegenden Ende 41" verlaufende innere Fase 41"" aufweist, an dessen gegenüberliegenden Ende 41" ein Außengewinde der Größe M30x1,5 in einer Länge von 20 mm angeordnet ist und an dessen freiem Ende vorzugsweise vier kreuzweise und konvex zur Stirnfläche 41' verlaufende Fasensegmente 44 in einer vorzugsweisen Länge von 3 mm, einer Breite von 4 mm und einer Tiefe von 2 mm sowie einem Fasenwinkel von 60° eingeformt sind.

Auf den Aufnahmezylinder 41 sind in der Reihenfolge von der Seite des Außengewindes 43 ein standardisierter Spannring 45, gemäß Fig.51 und Fig.52, vorzugsweise aus Stahl, ein Kegelring 46, gemäß der Fig.53 und 54, mit seiner Fase zum Spannring 45 aufgesteckt, der vorzugsweise eine Breite von 4 mm, einen äußeren Durchmesser von 35,5 mm einen inneren Durchmesser von 30,8 mm aufweist und mit einer einseitig angeformten äußeren Fase von 2 mm Breite und einem Fasenwinkel 60° ausgestattet ist. Es folgen vorzugsweise zwei Dichtungsringe 47, gemäß Fig.55 und 56, aus Kupfer beispielsweise nach DIN 7603 der Nenngröße 30x38 und mit einer Höhe von 2,5 mm, ein weiterer Kegelring 46 der vorher beschriebenen Größe mit seiner Fase zu einem zweiten Spannring 45 der vorher beschriebenen Größe. Abschließend wird auf das Außengewinde 43 des Aufnahmezylinders 41 eine Ringmutter 48, gemäß Fig.57 und 58, in einer vorzugsweisen Breite von 6 mm, einem Außendurchmesser von 35,5 mm und einem Innengewinde von M30x1,5 sowie mit vorzugsweise vier stirnseitig eingeformten rechteckigen Aussparungen 48' in einer Breite von 5 mm und einer Länge von 3 mm aufgeschraubt, mit der das zweite zylindrische Klemmsystem 40, gemäß Fig. 60 bis 62, vormontiert wird. Durch leichtes Anziehen der Ringmutter 48 werden die Spannringe 45 durch die Konusfläche der Kegelringe 46 und die Dichtungsringe 47 ein wenig über den Außendurchmesser des Bundes 42 und der Ringmutter 48 hinaus gedrückt. In diesem Zustand wird das zweite zylindrische Klemmsystem 40 zuerst mit dem Bund 42 in das offene Ende eines Rohrs 8, gemäß Fig.67 und 68, eingesteckt, bis es mit dem Rohrstoß eine Ebene bildet. Jetzt wird der Konterschlüssel 60 nach den Figuren 70 bis 75 stirnseitig so in das mit dem zweiten zylindrischen Klemmsystem 40 bestückte Rohrende eingeführt, daß der innere Ringsteckschlüssel 61 mit seinen Segmentnasen 61" in die Fasensegmente 44 des Aufnahmezylinders 41 einrastet und die rechteckigen Nasen 62" des äußeren Ringsteckschlüssels 62 in die rechteckigen Aussparungen 48' der Ringmutter 48 eingreifen. Mit den Griffen 63 und 64 wird der äußere Ringsteckschlüssel 62 gegen den inneren Ringsteckschlüssel 61 um eine gemeinsame Achse gedreht und das zweite zylindrische Klemmsystem 40, gemäß Fig. 67, stabil arretiert und radial zur Rohrinnenwand abgedichtet. Die zweiten zylindrischen Klemmsysteme 40 werden beim Arretieren in den Rohren 8 zwischen 2 bis 2,5 mm zusammengepreßt, was einen gewissen Spielausgleich an den Rohrverbindungsstellen erfordert. Auf die vorher beschriebene Weise wird danach ein zweites Rohr 8 vormontiert.

Nun wird eine Innenrohrmuffe 50, gemäß Fig. 63 und 64, mit einem vorzugsweisen Außendurchmesser von 35,5 mm und einem Innengewinde von M30 x 1,5 und einer Breite von 13 mm, gemäß Fig.69, herstellbar. Auf das freie Stück des Außengewindes 43 des zweiten zylindrischen Klemmsystems 40 in das Ende des ersten Rohrs 8 wird das eine ende der Innenrohrmuffe 50 aufgeschraubt. In die Innenrohrmuffe 50 wird eine Dichtung 70, gemäß Fig.65, und 66, beispielsweise eine Ringdichtung mit einem Außendurchmesser von 38 mm einem Innendurchmesser von 35,5 mm und einer Stärke von 1 mm aus besonders lebensmittelfreundlichem Gylon 3501 E eingesetzt. Jetzt wird das zweite mit einem zweiten zylindrischen Klemmsystem 40 bestückte Rohr 8 mit dem Außengewinde 43 des Aufnahmezylinders 41 in die Innenrohrmuffe 50 eingeschraubt, bis die beiden stumpfen Rohrenden und die Stirnflächen 41' fest gegen die Dichtung 70 drücken. Bei diesem Schraubvorgang wird die Dichtung 70 derart zusammengedrückt, daß sie die axiale Abdichtung und einen nahtlosen Übergang innerhalb des Universal- Verbindungssystems 1 gewährleistet. Bei dem Schraubvorgang kann zur zusätzlichen Sicherheit beispielsweise bei gasförmigen Medien eine weitere Abdichtung zwischen dem Außengewinde 43 des Aufnahmezylinders 41 und dem Innengewinde 51' der Innenrohrmuffe 50 mittels Teflonband, Hanf oder Kleber erfolgen. Die Dichtung 70 hat darüber hinaus die Funktion, den Spielausgleich herzustellen, der beim Zusammenschrauben der Rohre 8 in der Innenrohrmuffe 50 durch das Zusammenpressen der zweiten zylindrischen Klemmsysteme 40 erforderlich ist. Grundsätzlich sind alle Teile der Ausführungsformen des Universal- Verbindungssystems 1 miteinander kombinierfähig und durch geringfügige Änderungen in den Abmessungen und Austausch einzelner technischer Merkmale an individuelle Anwendungsbedingungen anpassungsfähig.

### Aufstellung der verwendeten Bezugszeichen

- 1: Universal- Verbindungssystem,
- 2: erstes zylindrisches Klemmsystem,
- 2': Kanäle,
- 3: erstes Verbindungselement,
- 4: zweites radial schwenkbares Verbindungselement,
- 5: Anschlußstellen,
- 6: Gewindebolzen,
- 7: Element,
- 8: Rohr
- 8': Durchgangsöffnung,
- 8'': einstufige Fase,
- 8''': zweistufig Fase,
- 9: Aufnahmeringscheibe,
- 9': Hohlzylinder,
- 9'': Innengewinde,
- 10: Spannring,
- 11: Ringscheibe,
- 11': Innendurchmesser,
- 11'': radiale Durchgangsgewindebohrung,
- 11''': Senkung,
- 12: Endringscheibe,
- 12': Innendurchmesser,
- 13: Durchgangsöffnungen,
- 14: Durchgangsbohrungen,
- 14': Innengewinde,
- 15: Spannschrauben,
- 16: Hohlprofil,
- 16': Stirnseiten,
- 16'': Lagerstellen,
- 16''': Langlöcher,
- 17: Gelenkbolzen,
- 18: Gelenkschenkel,
- 18': Segmente,
- 18'': Lagerstellen,
- 18''': Durchgangsbohrungen,
- 19: Gelenkschenkel,
- 19': Segmente,
- 19'': Lagerstellen,
- 20: Abstandsegmente,
- 21: Gelenkschenkel,
- 21': Segment,
- 21'': Lagerstellen,
- 21''': Durchgangsbohrungen,
- 22: Gelenkschenkel,
- 22': Segment,
- 22'': Lagerstellen,
- 22''': Segment,
- 22'''': Durchgangsbohrungen,
- 23: Gelenkbolzen,
- 23: Durchgangsgewindebohrung,
- 24: Winkelstück,
- 25: Vollprofil,
- 26: zylindrische Ringscheibe,
- 27: zylindrischer Metallring,
- 27': konkave oder rechteckige Mantelfläche,
- 28: O- Ring
- 29: zylindrischer Metallring,
- 30: zylindrische Dichtungshülse,
- 31: Maschinenschraube,
- 40: zweites zylindrisches Klemmsystem,
- 41: Aufnahmezylinder,
- 41': Stirnflächen,
- 41'': gegenüberliegendes Ende des Aufnahmezylinders,
- 41''': äußeres Ende des Aufnahmezylinders,
- 41'''': innere Fase,
- 42: Bund,
- 43: Außengewinde,
- 44: Fasensegmente,
- 45: Spannring,
- 46: Kegelring,
- 47: Dichtring,
- 48: Ringmutter,
- 48': Aussparungen,
- 50: Innenrohrmuffe,
- 50': Innengewinde,
- 60: Konterschlüssel,
- 61: innerer Ringsteckschlüssel,
- 61': Hohlzylinder,
- 61'': Segmentnasen,
- 61''': zylindrischer Dorn,
- 62: äußerer Ringsteckschlüssel,
- 62': Hohlzylinder,
- 62'': rechteckige Nasen,
- 63: Knebelgriff,
- 64: einhebliger Griff,
- 70: Dichtung

- X: Achse des Verbindungselements 3,
- Y: Achsen der Gelenkschenkel,
- Z: Bolzenachse des Gelenkschenkelbolzens,
- W: Bolzenachse der Gelenkbolzen.

## Patentansprüche

1. Universal- Verbindungssystem zur Verbindung aneinander gefügter Rohre (8), mit geradem Schnitt oder Gehrungsschnitt versehenen Rohrenden für geradlinige, kreuzweise, T- förmige sowie spitz- und stumpfwinklige Rohrverbindungen sowie zur Verbindung von Rohren (8) mit Elementen (7) wie Winkelstücken (24), Rohrbögen, Profilen (25), Hohlprofilen und Platten, bestehend aus Klemmsystemen, die im Rohr radial gehalten und durch Verbindungselemente miteinander verbunden sind, **dadurch gekennzeichnet, daß** das Universal- Verbindungssystem (1) mehrere erste zylindrische Klemmsysteme (2) mit axialen Kanälen (2'), die mit einem ersten Verbindungselement (3) oder mit einem zweiten, radial schwenkbaren Verbindungselement (4) zu koppeln sind und mehrere zweite zylindrische Klemmsysteme (40), die mit einem Verbindungselement in Form einer Innenrohrmuffe (50) miteinander lösbar zu verbinden sind, aufweist,
daß die ersten Verbindungselemente (3) und die zweiten radial schwenkbaren Verbindungselemente (4) jeweils endseitig und die ersten Verbindungselemente (3) außerdem mittig mit axial und radial beweglichen Anschlußstellen (5) ausgestattet sind,
daß die ersten zylindrischen Klemmsysteme (2) über Gewindebolzen (6) untereinander, mit ersten Verbindungselementen (3), mit zweiten radial schwenkbaren Verbindungselementen (4) oder direkt mit Elementen (7) lösbar zu verbinden sind,
daß das Universal- Verbindungssystem (1) über radiale Spannung der ersten zylindrischen Klemmsysteme (2) oder der zweiten zylindrischen Klemmsysteme (40) innerhalb von Rohren (8) von außen nicht sichtbar arretiert und befestigt ist, wobei die Kanäle (2') der ersten zylindrischen Klemmsysteme (2) sowie die zweiten zylindrischen Klemmsysteme (40) die Durchlässigkeit gasförmiger und flüssiger Medien oder die Durchführung von Kabeln gestatten,
daß mehrere mit ersten zylindrischen Klemmsystemen (2) bestückte Rohre (8) über an den ersten zylindrischen Klemmsystemen (2) und an den Anschlußstellen (5) der ersten Verbindungselemente (3) oder der zweiten radial schwenkbaren Verbindungselemente (4) angeordnete Gewindebolzen (6) geradlinig, T- förmig, kreuzweise, spitz- und stumpfwinklig, lösbar miteinander zu verbinden sind,
daß mit geraden Schnitten, Gehrungsschnitten sowie Gehrungsschnitten mit angeformtem Radius versehene Rohrenden der Rohre (8) über Gewindebolzen (6) an den ersten Klemmsystemen (2) stumpf aneinanderzufügen, mit Dichtungselementen abzudichten, an mit Durchgangsöffnungen (8') versehene Rohrmäntel formschlüssig anzupassen, in Rohrmäntel einzustecken oder mit Elementen (7) direkt zu verbinden sind,
daß zwei, mit je einem zweiten zylindrischen Klemmsystem (40) ausgestattete, Rohre (8) über die Innenrohrmuffe (50) und zu den Rohrwänden über Dichtungsringe (47) radial flüssigkeits-, gas- und druckdicht abgedichtet und mit einer, innerhalb der Innenrohrmuffe (50) zwischen den beiden zweiten zylindrischen Klemmsystemen (40), angeordneten Dichtung (70) miteinander auf Stoß verschraubt und axial flüssigkeits-, gas- und druckdicht abgedichtet sind,
daß das für die Innenrohrmuffe (50) an beiden zu verbindenden zweiten zylindrischen Klemmsystemen (40) zur Verfügung stehende Außengewinde (43) zusammen mit der Dichtung (70) immer breiter ist, als die Breite der Innenrohrmuffe (50) und
daß das an der Nahtstelle innerhalb der Rohrverbindung montierte Universal-Verbindungssystem (1) eine ebene, zylindrische Innenrohrfläche aufweist, die beidseitig gleitend in den Innenrohrdurchmesser übergeht.

2. Universal- Verbindungssystem nach Anspruch 1, **dadurch gekennzeichnet, daß** das erste zylindrische Klemmsystem (2) aus einer einerseits planen und andererseits vom Kreisumfang zum Mittelpunkt angefasten Aufnahmeringscheibe (9) mit einem im Zentrum der angefasten Ringfläche rechtwinklig angeformten Hohlzylinder (9') mit durchgehendem rechts- oder linksläufigem Innengewinde (9") besteht, auf den in der Reihenfolge ein Spannring (10), eine Ringscheibe (11), ein zweiter Spannring (10) und eine einseitig zum Mittelpunkt angefaste und andererseits plane Endringscheibe (12) aufgesetzt sind, daß die Aufnahmeringscheibe (9), die Ringscheibe (11) und die Endringscheibe (12) jeweils mit mehreren axial in den Ringflächen angeordneten Durchgangsöffnungen (13) und Durchgangslöchern (14) ausgestattet sind, daß die Durchgangslöcher (14) in der Aufnahmeringscheibe (9) ein Innengewinde (9''') aufweisen, daß die Innendurchmesser (11') und (12') der Ringscheibe (11) und der Endringscheibe (12) dem Außendurchmesser des Hohlzylinders (9') angepaßt sind, daß die Aufnahmeringscheibe (9), die Ringscheibe (11) und die Endringscheibe (12) durch in den Durchgangslöchern (14) geführte Spannschrauben (15) miteinander verbunden sind, daß in der Ringscheibe (11) ein radial verlaufendes Gewindedurchgangsloch (11") mit Senkungen (11"') an der Mantelfläche und mehrere axiale Durchgangsöffnungen (13) angeordnet sind und die Teile des ersten zylindrischen Klemmsystems (2) durch einen durchgehenden zentrischen Gewindebolzen (6) und beidseitig auf diesen aufgeschraubte Muttern (6') gehalten sind, daß der Außendurchmesser der Teile des ersten zylindrischen Klemmsystems (2) kleiner als der Innendurchmesser der zu verbindenden Rohre (8) ausgelegt ist, daß die Spannringe (10) jeweils in den angefasten Bereichen der Aufnahmeringscheibe (9) und der Endringscheibe (12) lagern, daß die Durchgangsöffnungen (13) durch das gesamte erste zylindrische Klemmsystem (2) verlaufende Kanäle (2') bilden und daß durch festes Anziehen der Spannschrauben (15) oder der Muttern (6`) auf dem zentrischen Gewindebolzen (6) die Spannringe (10) über den Außendurchmesser der Teile des ersten zylindrischen Klemmsystems (2) hinaus gespreizt und radial gegen den inneren Rohrmantel des jeweiligen Rohrs (8) gepreßt sind.

3. Universal- Verbindungssystem nach Anspruch 1, **dadurch gekennzeichnet, daß** das erste Verbindungselement (3) ein Hohlprofil (16) mit offenen Stirnseiten (16') ist, dessen Außenmaße maximal dem Außendurchmesser der ersten zylindrischen Klemmsysteme (2) entsprechen, in dem jeweils endseitig und gegenüberliegend zwei Lagerstellen (16") angeordnet sind, daß jeweils in einer Ebene zwischen zwei Lagerstellen (16") ein Langloch (16''') gegenüberliegend angeordnet ist und daß mittig und kreuzweise zu den Lagerstellen (16") und den Langlöchern (16"') zwei weitere gegenüberliegende Lagerstellen (16") angeordnet sind.

4. Universal- Verbindungssystem nach Anspruch 1, **dadurch gekennzeichnet, daß** das zweite radial schwenkbare Verbindungselement (4) in einer kompakten Ausführung aus zwei durch einen Gelenkbolzen (17) miteinander verbundenen Gelenkschenkeln (18) und (19) besteht, deren Außenabmessungen maximal dem Außendurchmesser der ersten zylindrischen Klemmsysteme (2) entsprechen, daß der Gelenkschenkel (18) aus zwei Segmenten (18') und der Gelenkschenkel (19) aus zwei Segmenten (19') besteht, daß die Stirnseiten der Segmente (18') und (19') einerseits als geschlossene einseitig eingekerbte Ösen und andererseits rechteckig ausgebildet und deren Flächen endseitig jeweils mit einer Lagerstelle (18") und (19") ausgestattet sind, daß die Segmente (18') und (19') jeweils durch ein Abstandsegment (20) und herkömmliche Schraubverbindung über Durchgangsöffnungen (18"') und (19'") derart miteinander lösbar verbunden sind, daß sich die abgerundeten und die rechteckigen Stirnseiten und die Lagerstellen (18") und (19") deckungsgleich gegenüberliegen, daß der Gelenkbolzen (17) in den an den abgerundeten Stirnseiten angeordneten Lagerstellen (18") und (19") der Segemente (18') und (19') geführt ist und daß die Gelenkschenkel (18) und (19) um eine Bolzenachse (Z) des Gelenkbolzens (17) beidseitig zu einer Schenkelachse (Y) in einem Winkelbereich von 179° bis < 45° radial schwenkbar sind.

5. Universal- Verbindungssystem nach Anspruch 1, **dadurch gekennzeichnet, daß** die Anschlußstellen (5) der ersten Verbindungselemente (3) und der zweiten radial schwenkbaren Verbindungselemente (4) aus einem, in jeweils zwei gegenüberliegend angeordneten Lagerstellen (16"), (18"), (19") axial und radial beweglichen Gelenkbolzen (23) bestehen, der mittig und rechtwinklig zu einer Bolzenachse (W) mit einer Gewindedurchgangsbohrung (23`) versehen ist.

6. Universal- Verbindungssystem nach Anspruch 1, **dadurch gekennzeichnet, daß** die Elemente (7) in verschiedenen Formen und Winkeln ausgerührte Winkelstücke (24) mit Durchgangsöffnungen (13) Rohrbögen, Vollprofile (25) mit angeformten oder eingeschraubten Gewindebolzen (6), Platten, Spannschlösser oder dergleichen sind.

7. Universal- Verbindungssystem nach Anspruch 1, **dadurch gekennzeichnet, daß** mit geradem Schnitt oder mit Gehrungsschnitt versehene Rohrenden der Rohre (8) bei Rohrverbindungen für Kabelführungen und für optische Gestaltungselemente zum Rohrinneren eine einstufige Fase (8") in einem Winkel (β) aufweisen.

8. Universal- Verbindungssystem nach Anspruch 1, **dadurch gekennzeichnet, daß** mit geradem Schnitt oder Gehrungsschnitt versehene Rohrenden der Rohre (8) bei Rohrsystemen zur Führung flüssiger oder gasförmiger Medien, je eine vom Außenrohrmantel zum Rohrinneren verlaufende zweistufige Fase (8"') aufweisen und, daß zwischen den zweiten Fasenhälften ein Dichtungselement aus säurefestem Material angeordnet ist.

9. Universal- Verbindungssystem nach Anspruch 1, **dadurch gekennzeichnet, daß** die Dichtungselemente jeweils eine zylindrische Ringscheibe (26), ein zylindrischer Metallring (27) mit konkav oder rechtwinklig ausgebildeter Mantelfläche (27`), in der ein O- Ring (28) oder ein zylindrischer Ring (29) gelagert ist, oder eine zylindrische Dichthülse (30) sind.

10. Universal- Verbindungssystem nach einem der vorhergehenden Ansprüche, **dadurch gekennzeichnet, daß** jeweils das letzte Rohr (8) einer Rohrverbindung an Stelle des Gewindebolzens (6) mit einer im zentrischen Gewinde des ersten zylindrischen Klemmsystems (2) angeordneten Maschinenschraube (31) mit einer vorgesetzten Unterlegscheibe verschlossen ist, wobei im letzten Rohr (8) einer Rohrverbindung, die gasförmige oder flüssige Medien führt, das erste zylindrische Klemmsystem (2) an Stelle des Spannrings (10) mit einem O- Ring (28) ausgestattet ist.

11. Universal- Verbindungssystem nach Anspruch 1, **dadurch gekennzeichnet, daß** das zweite zylindrische Klemmsystem (40) aus einem Aufnahmezylinder (41) mit zwei offenen Stirnflächen (41') besteht, der mit einem an einem äußeren Ende (41"') radial angeformten Bund (42) ausgestattet ist, dessen innerer Bereich offen und eine zur Stirnfläche (41') konkav ausgebildete innere Fase (41 "") aufweist, oder bis auf ein axial angeordnetes zentrisches Gewindeloch und radial um das Gewindeloch verteilte Durchgangsöffnungen (13) geschlossen ist und an dessen gegenüberliegendem Ende (41") ein, etwa bis zur Mitte des Aufnahmezylinders (41) verlaufendes, Außengewinde (43) und mindestens zwei axial eingeformte, das Außengewinde (43) in diesen Bereichen unterbrechende und zur Stirnfläche (41') des gegenüberliegenden Endes (41") konvex verlaufende Fasensegmente (44) angeordnet sind, auf den in der Reihenfolge ein Spannring (45), ein Kegelring (46) mit seiner Konusfläche zum Spannring (45), mindestens ein Dichtring (47), ein zweiter Kegelring (46) mit seiner ebenen Stirnfläche zu dem Dichtring (47) und ein weiterer Spannring (45) aufgesteckt sind, die einerseits von dem Bund (42) und andererseits von einer Ringmutter (48), die an ihrer freien Stirnfläche mit mindestens zwei gegenüberliegend angeordneten, axial verlaufenden rechteckigen Aussparungen (48') ausgestattet ist, gehalten sind, daß die Ringmutter (48) über das Außengewinde (43) auf den Aufnahmezylinder (41) aufgeschraubt ist, daß der Außendurchmesser des ungespannten zweiten Klemmsystems (40) geringfügig kleiner ist als der Innendurchmesser der Rohre (8) und, daß nach festem Anziehen der Ringmutter (48) gegen den Bund (42) einerseits der Dichtring (47) axial flach zusammengepreßt und andererseits zusammen mit dem Dichtring (47) die Spannringe (45) durch die Konusfläche der Kegelringe (46) mit einem Konterschlüssel (60) radial über den Außendurchmesser der Ringmutter (48) hinaus gedrückt sind.

12. Universal- Verbindungssystem nach Anspruch 11, **dadurch gekennzeichnet, daß** der Konterschlüssel (60) aus zwei gleitend ineinander geführten und um eine gemeinsame Achse gegeneinander drehbar gelagerten Ringsteckschlüsseln (61) und (62) besteht, daß der innere Ringsteckschlüssel (61) aus einem Hohlzylinder (61') mit einem endseitig angeordneten Knebelgriff (63), mit an seiner freien Stirnfläche angeformten zur Stirnfläche konkav angefasten axial angeformten Segmentnasen (61 ") und einem zentrisch und axial angeordneten zylindrischen Dorn (61'") besteht, wobei Anzahl, Größe und Form der Segmentnasen (61") denen der eingeformten Fasensegmente (44) im Aufnahmezylinder (41) und der Durchmesser sowie die Wandstärke des Hohlzylinders (61') und der Durchmesser des zylindrischen Doms (61"') den Abmessungen des Aufnahmezylinders (41) entsprechen, daß der äußere Ringsteckschlüssel (62) aus einem geschlossenen Sechskantschlüssel mit einhebligem Griff (64) besteht, in dessen Zentrum eine zylindrische Öffnung eingearbeitet ist, in der ein axial verlaufender Hohlzylinder (62') kraftschlüssig eingesetzt ist, der einseitig aus der zylindrischen Öffnung herausragt und an dessen freier Stirnfläche axiale, rechteckige Nasen (62") angeformt sind, wobei Anzahl, Größe und Form der Nasen (62") denen der axial verlaufenden rechteckigen Aussparungen (48') der Ringmutter (48) und der Durchmesser sowie die Wandstärke des Hohlzylinders (62') den Abmessungen der Ringmutter (48) entsprechen und daß der Hohlzylinder (62') des äußeren Ringsteckschlüssels (62) um etwa die doppelte Länge der Segmentnasen (61 ") des inneren Ringsteckschlüssels (61) länger ausgeführt ist.

13. Universal- Verbindungssystem nach den vorhergehenden Ansprüchen, **dadurch gekennzeichnet, daß** alle Teile des Universal- Verbindungssystems (1) Profile, gedrehte oder gefräste Teile aus Edelstahl in Leichtbauweise, Standardteile aus Metall, Metallegierungen oder Kunststoff sowie aus mit Lebensmitteln oder Säuren und Laugen verträglichen Materialien bestehen.

## Claims

1. Universal connecting system for connecting tubes (8) with straight or mitre cut tube ends joined to each other for straight line, crosswise, T-shaped, acute and obtuse angled tube connections and for connecting tubes (8) with elements (7) such as elbows (24), tube elbows, profiles (25), hollow profiles and plates, consisting of clamp systems which are held radially in the tube and are connected with each other by connecting elements, **characterised by**:
that the universal connecting system (1) shows a plurality of primary cylindrical clamp systems (2) with axial channels (2') which are to be coupled with a primary connecting element (3) or with a secondary, radial swivelling connecting element (4), and a plurality of secondary cylindrical clamp systems (40) which are to be detachably connected together with a connecting element in the form of an inner tube sleeve (50),
that the primary connecting elements (3) and the secondary, radial swivelling connecting elements (4) are each equipped at the ends and the primary connecting elements (3) also in the middle with axial and radial movable connecting points (5),
that the primary, cylindrical clamp systems (2) are to be detachably connected with each other, with primary connecting elements (3), with secondary, radial swivelling connecting elements (4) or directly with elements (7) using threaded bolts (6),
that the universal connecting system (1) using radial clamping of the primary cylindrical clamping systems (2) or the secondary cylindrical clamping systems (40) inside tubes (8) is not visibly locked and
fastened from the outside whereby the channels (2') of the primary cylindrical clamping systems (2) and the secondary cylindrical clamping systems (40) allow the permeability of gaseous and liquid media or the feed-through of cables,
that a plurality of tubes (8) fitted with primary cylindrical clamping systems (2) are to be detachably connected with each other in straight lines, T-shaped, crosswise, at acute and obtuse angles using the threaded bolts (6) arranged on the primary cylindrical clamping systems (2) and on the connecting points (5) of the primary connecting elements (3) or of the secondary, radial swivelling connecting elements (4),
that tube ends of the tubes (8) with straight cuts, mitre cuts and mitre cuts with integrally formed radius are to be obtusely joined to each other on the primary clamping systems (2) using threaded bolts (6), sealed with sealing elements, positively fitted to tubular casings showing feed-through openings (8'), inserted in tubular casings or directly connected with elements (7).
that two tubes (8), each fitted with a secondary cylindrical clamping system (40), radially sealed liquid, gas and pressure-tight using the inner tube sleeve (50) and sealing rings (47) to the tube walls and with a seal (70) arranged inside the inner tube sleeve (50) between both secondary, cylindrical clamping systems (40) screwed flush with each other and axially sealed liquid, gas and pressure-tight,
that the outer thread (43) available on both secondary cylindrical clamping systems (40) for the inner tube sleeve (50) together with the seal (70) is always wider than the width of the inner tube sleeve (50) and
that the universal connecting system (1) installed at the joint inside the tube connection shows an even, cylindrical inner tube surface which slides into the inside tube diameter on both sides.

2. Universal connecting system according to Claim 1, **characterised by**,
that the primary cylindrical clamping system (2) comprises a mounting disc plate (9) planar on one side and on the other side chamfered from the circumference to the middle point with a hollow cylinder (9') at a right angle in the centre of the chamfered ring surface with continuous right or left hand internal thread (9") on which a clamping ring (10), a ring washer (11), a second clamping ring (10) in this order and on one side a planar and on the other side a chamfered to the middle point end ring washer (12) are placed,
that the mounting disc plate (9), the ring washer (11) and the end ring washer (12) each show a plurality of feed-through openings (13) and through holes (14) axially arranged in the ring surfaces,
that the through holes (14) in the mounting disc plate (9) show an internal thread (9'),
that the inner diameters (11') and (12') of the ring washer (11) and the end ring washer (12) are adapted to the outer diameter of the hollow cylinder (9'),
that the mounting disc plate (9), the ring washer (11) and the end ring washer (12) are connected with each other by the clamping bolts (15) inserted in the through holes (14),
that a radial running threaded through hole (11 ") with countersinks (11') on the shell and a plurality of feed-through openings (13) are arranged in the ring washer (11) and the parts of the primary cylindrical clamping system (2) are held by a centric threaded through bolt (6) with nuts (6') screwed on to this on both sides,
that the outer diameter of the parts of the primary cylindrical clamping system (2) is designed smaller than the inner diameter of the tubes (8) to be connected,
that the clamping rings (10) are each seated in the chamfered areas of the mounting disc plate (9) and the end ring washer (12),
that the feed-through openings (13) form channels (2') running through the complete primary cylindrical clamping system (2) and
that by firmly tightening the clamping bolts (15) or the nuts (6') on the centric threaded bolts (6), the clamping rings (10) are spread over the outer diameter of the parts of the primary cylindrical clamping system (2) and pressed radially against the inner tube sleeve of the respective tube (8).

3. Universal connecting system according to Claim 1, **characterised by**,
that the primary connecting element (3) is a hollow profile (16) with open front sides (16') whose maximum outer dimensions correspond to the outer diameter of the primary cylindrical clamping systems (2) in which there are two bearing points (16")each arranged on the end and opposite each other,
that slots (16') opposite each other are arranged between two bearing points (16") in each level and
that two further bearing points (16") opposite each other are arranged in the centre and crosswise to the bearing points (16") and the slots (16').

4. Universal connecting system according to Claim 1, **characterised by**,
that the secondary radially swivelling connecting element (4) in a compact design comprises two pivot arms (18) and (19) connected to each other using a hinge bolt (17), the maximum diameters of which correspond to the outer diameter of the primary cylindrical clamping systems (2),
that the pivot arm (18) comprises two segments (18') and the pivot arm (19) comprises two segments (19'),
that the front sides of the segments (18') and (19') are formed on one side as notched and on the other side as square lugs and whose surfaces each have a bearing point (18") and (19") at the end,
that the segments (18') and (19') are each connected with each other in such a way to be detachable using a spacer segment (20) and conventional threaded connection via through holes (18') and (19"),
that the opposing rounded and the square front sides and the bearing points (18") and (19") are lined up with each other,
that the hinge bolt (17) is inserted in bearing points (18") and (19") of the segments (18') and (19') arranged on the rounded front sides and that the pivot arms (18) and (19) can be radially swivelled around a bolt axis (Z) of the hinge bolt (17) on both sides to an arm axis (Y) in an angle range of 179° to < 45°.

5. Universal connecting system according to Claim 1, **characterised by**,
that the connection points (5) of the primary connecting elements (3) and of the secondary, radial swivelling connecting elements (4) comprise an axially and radially moveable hinge bolt (23) each arranged in two opposing bearing points (16"), (18"), (19") showing a threaded through hole (23') in the centre and at right angles to a bolt axis (W).

6. Universal connecting system according to Claim 1, **characterised by**,
that the elements (7) in different shapes and angles are designed as elbows (24) with feed-through openings (13) tube elbows, full profiles (25) with integral or screwed-in hinge bolts (6), plates, shackles or similar.

7. Universal connecting system according to Claim 1, **characterised by**,
that tubes (8) showing straight cut or mitre cut tube ends for tube connections for cable routing and for visual design elements show a single-stage bevel (8") at an angle (β) to the inside of the tube.

8. Universal connecting system according to Claim 1, **characterised by**,
that tubes (8) showing straight cut or mitre cut tube ends for tube connections for tube systems for carrying liquid or gaseous media each show a two-stage bevel (8") running from the outer tube sleeve to the inside of the tube and that a sealing element made of acid resistant material is arranged between the two halves of the bevel.

9. Universal connecting system according to Claim 1, **characterised by**,
that the sealing elements respectively are a cylindrical ring washer (26), a cylindrical metal ring (27) with concave or right-angled shell (27'), in which there is an O-ring (28) or a cylindrical ring (29), or a cylindrical seal sleeve (30).

10. Universal connecting system according to one of the preceding Claims, **characterised by**,
that in each case the last tube (8) of a tube connection is locked at the place of the hinge bolt (6) with a grub screw (31) with a prefixed washer in the centric thread of the primary cylindrical clamping system (2) whereby in the last tube (8) of a tube connection which carries liquid or gaseous media, the primary clamping system (2) shows an O-ring (28) at the place of the clamping ring (10).

11. Universal connecting system according to Claim 11, **characterised by**,
that the secondary cylindrical clamping system (40) comprises a receiving cylinder with two open faces (41')which is provided with a radial integral collar (42) whose inner area is open and shows a concave formed inner bevel (41"") to the face (41') or is closed up to an axially arranged centric thread hole and feed-though openings (13) radially distributed around the thread hole and, on its opposite end an outer thread (43) running approximately to the centre of the receiving cylinder (41) and at least two axially integral convex running bevel segments (44) to the face (41') of the opposite end (41 ") which interrupt the outer thread (43) in these areas are arranged, on which are placed in the order a clamping ring (45), a tapered ring (46) with its cone surface to the clamping ring (45), at least one sealing ring (47), a second tapered ring (46) with its flat face to the sealing ring (47) and another clamping ring (45), which is held on one side by the collar (42) and on the other side by a ring nut (48) which is provided on its free face with at least two axial running rectangular recesses (48') arranged opposite each other,
that the ring nut (48) is screwed on to the receiving cylinder (41) by means of the outer thread (43),
that the outer diameter of the unclamped secondary clamping system (40) is marginally smaller than the inside diameter of the tubes (8) and,
that after firmly tightening the ring nut (48) against the collar (42), the sealing ring (47) on one side is axially compressed flat and on the other side together with the sealing ring (47), the clamping rings (45) are pressed out radially over the outer diameter of the ring nut (48) by means of the cone surface of the tapered rings (46) with a backup wrench (60).

12. Universal connecting system according to Claim 11, **characterised by**,
that the backup wrench (60) comprises two sliding into each other ring socket wrenches (61) and (62) pivoted against each other on a common axis,
that the inner ring socket wrench (61) comprises a hollow cylinder (61') with a locking handle (63) arranged on one end with bevelled axial integral segment lugs (61") formed concave to the face on its free face and a centric and axially arranged mandrel (61"') whereby number, size and shape of the segment lugs (61"), those of the integral bevel segments (44) in the receiving cylinder (41) and the diameter and the wall thickness of the hollow cylinder (61') and the diameter of the cylindrical mandrel (61"') correspond to the dimensions of the receiving cylinder (41),
that the outer ring socket wrench (62) comprises a closed hexagonal wrench with raised handle (64) with a cylindrical opening in its centre, in which the axial running hollow cylinder (62') is friction-fitted, which protrudes out of the cylindrical opening on one side and shows axial, rectangular lugs (62") on its free face, whereby number size and shape of the lugs (62"), those of the axial running rectangular recesses (48') of the ring nut (48) and the diameter and the wall thickness of the hollow cylinder (62') correspond with the dimensions of the ring nut (48) and
that the hollow cylinder (62') of the outer ring socket wrench (62) is designed longer by about double the length of the segment lugs (61") of the inner ring socket wrench (61).

13. Universal connecting system according to the previous Claims, **characterised by**,
that all parts of the universal connecting system (1) profiles comprise turned or milled parts made of stainless steel in lightweight construction, standard parts made of metal, metal alloys or plastic and are made of materials compatible with foodstuffs or acids and alkalis.

## Revendications

1. Système universel de raccord pour la jonction de tuyaux (8) joints les uns aux autres et présentant des extrémités pourvues d'une coupe droite ou d'une coupe de biais, pour des raccords de tuyau rectilignes, en croix, en T et pour des raccords de tuyau à angle aigu et à angle obtus ainsi que pour la jonction de tuyaux (8) avec des éléments (7), tels que raccords angulaires (24), coudes de tuyau, profilés (25), profilés creux et plaques, se composant de systèmes de serrage qui sont retenus radialement dans le tuyau et sont reliés entre eux par le biais d'éléments de jonction, **caractérisé par le fait**
**que** le système universel de raccord (1) présente plusieurs premiers systèmes cylindriques de serrage (2) avec des canaux axiaux (2') qui sont à coupler avec un premier élément de jonction (3) ou avec un deuxième élément de jonction (4) à pivotement radial, ainsi que plusieurs deuxièmes systèmes cylindriques de serrage (40) qui sont à relier entre eux de façon amovible par l'intermédiaire d'un élément de jonction sous forme d'un manchon intérieur de tuyau (50),
**que** lesdits premiers éléments de jonction (3) et lesdits deuxièmes éléments de jonction (4) à pivotement radial sont équipés respectivement aux extrémités, et les premiers éléments de jonction (3) en sus au centre, de points de raccord (5) déplaçables axialement et radialement,
**que** les premiers systèmes cylindriques de serrage (2) sont à relier entre eux de façon amovible par l'intermédiaire de boulons filetés (6), avec des premiers éléments de jonction (3), avec de seconds éléments de jonction (4) à pivotement radial ou directement avec des éléments (7),
**que** le système universel de raccord (1) est arrêté et fixé par une tension radiale des premiers systèmes cylindriques de serrage (2) ou des deuxièmes systèmes cylindriques de serrage (40) à l'intérieur de tuyaux (8) de manière à ne pas être visible de l'extérieur, lesdits canaux (2') des premiers systèmes cylindriques de serrage (2) ainsi que les deuxièmes systèmes cylindriques de serrage (40) permettant la perméabilité de milieux gazeux et liquides ou le passage de câbles,
**que** plusieurs tuyaux (8) équipés de premiers systèmes cylindriques de serrage (2) sont à relier entre eux amoviblement de façon rectiligne, en T, en croix, à angle aigu et à angle obtus par l'intermédiaire de boulons filetés (6) disposés sur les premiers systèmes cylindriques de serrage (2) et sur les points de raccord (5) des premiers éléments de jonction (3) ou des deuxièmes éléments de jonction (4) à pivotement radial,
**que** les extrémités des tuyaux (8) qui sont pourvues de coupes droites, de coupes de biais ainsi que de coupes de biais à rayon formé sur celles-ci sont à joindre bout à bout par des boulons filetés (6) sur les premiers systèmes de serrage (2), sont à rendre étanche par des éléments d'étanchéité, sont à adapter à engagement positif à des nappes de tuyau pourvues d'ouvertures de passage (8'), sont à introduire dans des nappes de tuyau ou sont à relier directement à des éléments (7),
**que** deux tuyaux (8) pourvus chacun d'un deuxième système cylindrique de serrage (40) sont étanchés radialement par ledit manchon intérieur de tuyau (50) et en direction des parois des tuyaux par des bagues d'étanchéité (47) de manière à être imperméables aux liquides, aux gaz et à la pression, et sont vissés entre eux à joint et étanchés axialement de manière à être imperméables aux liquides, aux gaz et à la pression, par l'intermédiaire d'un joint d'étanchéité (70) disposé à l'intérieur du manchon intérieur de tuyau (50) entre les deux seconds systèmes cylindriques de serrage (40),
**que** le filet extérieur (43) qui est à disposition pour ledit manchon intérieur de tuyau (50) sur les deux seconds systèmes cylindriques de serrage (40) à relier est conjointement avec ledit joint d'étanchéité (70) toujours plus large que la largeur du manchon intérieur de tuyau (50), et
**que** le système universel de raccord (1) monté sur le point de jonction à l'intérieur du raccord de tuyau présente une surface intérieure cylindrique plane de tuyau qui se confond des deux côtés sans gradation avec le diamètre intérieur du tuyau.

2. Système universel de raccord selon la revendication 1, **caractérisé par le fait que** le premier système cylindrique de serrage (2) se compose d'un disque annulaire de réception (9) qui, d'un côté, est plan et, de l'autre côté, est chanfreiné de la circonférence vers le milieu et qui présente un cylindre creux (9') formé à angle droit au centre de la surface circulaire chanfreinée et ayant un filet intérieur continu à droite ou à gauche (9"), sur lequel sont placé dans l'ordre un anneau de serrage (10), un disque annulaire (11), un deuxième anneau de serrage (10) et un disque annulaire terminal (12) qui est chanfreiné sur un côté vers le milieu et qui, d'autre part, est plan, que ledit disque annulaire de réception (9), le disque annulaire (11) et le disque annulaire terminal (12) sont pourvus respectivement de plusieurs ouvertures de passage (13) et trous de passage (14) disposés axialement dans les surfaces annulaires, que lesdits trous de passage (14) dans le disque annulaire de réception (9) présentent un filet intérieur (9"'), que les diamètres intérieurs (11') et (12') du disque annulaire (11) et du disque annulaire terminal (12) sont adaptés au diamètre extérieur du cylindre creux (9'), que le disque annulaire de réception (9), le disque annulaire (11) et le disque annulaire terminal (12) sont reliés entre eux par l'intermédiaire de vis de serrage (15) guidés dans lesdits trous de passage (14), que dans ledit disque annulaire (11) sont disposés un trou fileté de passage (11') s'étendant radialement et ayant des enfoncements (11"') sur la surface latérale, ainsi que plusieurs ouvertures axiales de passage (13) et que les pièces du premier système cylindrique de serrage (2) sont retenues par un boulon fileté central continu (6) et par des écrous (6') vissés des deux côtés sur celui-ci, que le diamètre extérieur des pièces du premier système cylindrique de serrage (2) est conçu de manière à être inférieur au diamètre intérieur des tuyaux (8) à raccorder, que les anneaux de serrage (10) sont logés respectivement dans les zones chanfreinées du disque annulaire de réception (9) et du disque annulaire terminal (12), que les ouvertures de passage (13) forment des canaux (2') s'étendant à travers l'ensemble du premier système cylindrique de serrage (2) et que, en serrant fortement les vis de serrage (15) ou les écrous (6') sur le boulon fileté central (6), les anneaux de serrage (10) sont écartés au-delà du diamètre extérieur des pièces du premier système cylindrique de serrage (2) et sont pressés radialement contre la nappe intérieure du tuyau respectif (8).

3. Système universel de raccord selon la revendication 1, **caractérisé par le fait que** le premier élément de jonction (3) est un profilé creux (16) à côtés frontaux ouverts (16'), dont les dimensions extérieures correspondent au maximum au diamètre extérieur des premiers systèmes cylindriques de serrage (2) et dans lequel sont disposés respectivement aux extrémités et en vis-à-vis deux points de logement (16"), qu'un trou oblong (16"') est disposé en vis-à-vis respectivement dans un plan entre deux points de logement (16") et que deux autres points de logement (16") placés en vis-à-vis sont disposés de manière centrale et en croix par rapport aux points de logement (16") et aux trous oblongs (16"').

4. Système universel de raccord selon la revendication 1, **caractérisé par le fait que**, dans une configuration compacte, le deuxième élément de jonction (4) à pivotement radial se compose de deux branches articulées (18) et (19) qui sont reliées entre elles par un boulon articulé (17) et dont les dimensions extérieures correspondent au maximum au diamètre extérieur des premiers systèmes cylindriques de serrage (2), que la branche articulée (18) se compose de deux segments (18') et la branche articulée (19) se compose de deux segments (19'), que les côtés frontaux des segments (18') et (19') sont réalisés, d'un côté, comme oeillets fermés entaillés sur un côté et sont, de l'autre côté, rectangulaires et dont les faces sont munies aux extrémités respectivement d'un point de logement (18") et (19"), que les segments (18') et (19') sont reliés entre eux de façon amovible respectivement par un segment d'écartement (20) et au moyen d'un vissage classique par des ouvertures de passage (18"') et (19"') de telle manière que les côtés frontaux arrondis et les côtés frontaux rectangulaires ainsi que les points de logement (18") et (19") sont situés en regard les uns des autres de manière à coïncider, que le boulon articulé (17) est guidé dans les points de logement (18") et (19") des segments (18') et (19'), disposés sur les côtés frontaux arrondis, et que les branches articulées (18) et (19) peuvent pivoter radialement autour d'un axe de boulon (Z) du boulon articulé (17) des deux côtés d'un axe de branche (Y) dans une plage angulaire comprise entre 179° et < 45°.

5. Système universel de raccord selon la revendication 1, **caractérisé par le fait que** les points de raccord (5) des premiers éléments de jonction (3) et des deuxièmes éléments de jonction (4) à pivotement radial se composent d'un boulon articulé (23) déplaçable axialement et radialement dans respectivement deux points de logement (16"), (18"), (19") disposés en vis-à-vis, ledit boulon articulé étant pourvu au milieu et à angle droit par rapport à un axe de boulon (W) d'un trou fileté de passage (23').

6. Système universel de raccord selon la revendication 1, **caractérisé par le fait que** les éléments (7) sont des raccords angulaires (24) réalisés dans des formes et avec des angles différents et présentant des ouvertures de passage (13), des coudes de tuyau, des profilés pleins (25) avec des boulons filetés (6) formés sur ou vissés dans ceux-ci, des plaques, des tendeurs ou similaire.

7. Système universel de raccord selon la revendication 1, **caractérisé par le fait que**, dans le cas de jonctions de tuyaux pour le cheminement de câbles et pour des éléments optiques de configuration, les extrémités des tuyaux (8) pourvues d'une coupe droite ou d'une coupe de biais présentent vers l'intérieur du tuyau un chanfrein (8") à gradin unique à un angle (β).

8. Système universel de raccord selon la revendication 1, **caractérisé par le fait que**, dans le cas de systèmes de tuyaux destinés à conduire des milieux liquides ou gazeux, les extrémités des tuyaux (8) pourvues d'une coupe droite ou d'une coupe de biais présentent chacune un chanfrein (8"') à deux gradins s'étendant de la nappe extérieure du tuyau vers l'intérieur du tuyau, et qu'un élément d'étanchéité réalisé dans un matériau résistant aux acides est disposé entre les deuxièmes moitiés de chanfrein.

9. Système universel de raccord selon la revendication 1, **caractérisé par le fait que** les éléments d'étanchéité sont respectivement un disque annulaire cylindrique (26), un anneau métallique cylindrique (27) avec une surface latérale (27') réalisée de façon concave ou à angle droit dans laquelle est logé un O-ring (28) ou un anneau cylindrique (29), ou encore une douille cylindrique d'étanchéité (30).

10. Système universel de raccord selon l'une des revendications précédentes, **caractérisé par le fait que** respectivement le dernier tuyau (8) d'un raccord de tuyau est fermé, au lieu du boulon fileté (6), au moyen d'une vis d'assemblage (31) avec une rondelle intercalée, qui est disposée dans le filet central du premier système cylindrique de serrage (2), dans le dernier tuyau (8) d'un raccord de tuyaux qui conduit des milieux gazeux ou liquides le premier système cylindrique de serrage (2) étant équipé, au lieu de l'anneau de serrage (10), d'un O-ring (28).

11. Système universel de raccord selon la revendication 1, **caractérisé par le fait que** le deuxième système cylindrique de serrage (40) se compose d'un cylindre de réception (41) avec deux surfaces frontales ouvertes (41') lequel est pourvu d'un collet (42) formé radialement sur une extrémité extérieure (41"') et dont la zone intérieure est ouverte et présente un chanfrein intérieur (41 "") réalisé de façon concave vers la surface frontale (41'), ou lequel est fermé à l'exception d'un trou fileté central disposé axialement et d'ouvertures de passage (13) réparties radialement autour dudit trou fileté, et à l'extrémité opposée (41 ") duquel sont disposés un filet extérieur (43) s'étendant à peu près jusqu'au milieu du cylindre de réception (41) ainsi qu'au moins deux segments de chanfrein (44) formés axialement dedans, interrompant le filet extérieur (43) dans ces zones et s'étendant de façon convexe vers la surface frontale (41') de l'extrémité opposée (41 "), sur ledit cylindre de réception étant placés dans l'ordre un anneau de serrage (45), une bague conique (46) avec sa surface conique vers l'anneau de serrage (45), au moins une bague d'étanchéité (47), une deuxième bague conique (46) avec sa surface frontale plane vers la bague d'étanchéité (47) et un autre anneau de serrage (45) qui sont retenus par ledit collet (42) d'un côté et par un écrou à anneau (48) de l'autre côté qui est pourvu sur sa surface frontale libre d'au moins deux évidements rectangulaires (48') disposés en vis-à-vis et s'étendant axialement, que ledit écrou à anneau (48) est vissé par le filet extérieur (43) sur ledit cylindre de réception (41), que le diamètre extérieur du deuxième système de serrage (40) non tendu est légèrement inférieur au diamètre intérieur des tuyaux (8), et que, après avoir serré fortement ledit écrou à anneau (48) contre le collet (42), d'un côté la bague d'étanchéité (47) est comprimée axialement à plat et, de l'autre côté, les anneaux de serrage (45) conjointement avec la bague d'étanchéité (47) sont pressés par la surface conique des bagues coniques (46) au moyen d'une contre-clé (60) radialement au-delà du diamètre extérieur de l'écrou à anneau (48).

12. Système universel de raccord selon la revendication 11, **caractérisé par le fait que** ladite contre-clé (60) se compose de deux clés à pipe annulaires (61) et (62) menées à glissement l'une dans l'autre et logées de manière à pouvoir tourner l'une par rapport à l'autre autour d'un axe commun, que la clé annulaire intérieure à pipe (61) se compose d'un cylindre creux (61') avec une vis à poignée (63) disposée à l'extrémité, avec des nez de segment (61 ") formés axialement sur sa surface frontale libre et chanfreinés de façon concave vers la surface frontale, et avec un mandrin cylindrique (61 "') disposé de manière centrale et axiale, le nombre, la taille et la forme des nez de segment (61 ") correspondant à ceux des segments de chanfrein (44) formés dans le cylindre de réception (41), et le diamètre ainsi que l'épaisseur de paroi du cylindre creux (61') et le diamètre du mandrin cylindrique (61"') correspondant aux dimensions du cylindre de réception (41), que la clé annulaire extérieure à pipe (62) se compose d'une clé à six pans fermée ayant une poignée à levier unique (64), au centre de laquelle est pratiquée une ouverture cylindrique dans laquelle est inséré par adhérence un cylindre creux (62') s'étendant axialement lequel fait saillie de ladite ouverture cylindrique sur un côté et sur la surface frontale libre duquel sont formés des nez axiaux rectangulaires (62"), le nombre, la taille et la forme des nez (62") correspondant à ceux des évidements rectangulaires (48') de l'écrou à anneau (48) qui s'étendent axialement, et le diamètre ainsi que l'épaisseur de paroi du cylindre creux (62') correspondant aux dimensions de l'écrou à anneau (48), et que ledit cylindre creux (62') de la clé annulaire extérieure à pipe (62) est plus longue d'à peu près la double longueur des nez de segment (61 ") de la clé annulaire intérieure à pipe (61).

13. Système universel de raccord selon les revendications précédentes, **caractérisé par le fait que** tous les éléments dudit système universel de raccord (1) sont des profilés, des pièces tournées ou fraisées en acier spécial en construction légère, des pièces standard réalisées en métal, en alliages métalliques ou en matière plastique et dans des matériaux compatibles avec les denrées alimentaires ou les acides et lessives.
